# EUROPEAN PATENT APPLICATION

(11) **EP 2 620 964 A1**
(43) Date of publication of application: **31.07.2013**
(21) Application number: 11826939.8
(22) Date of filing: 26.09.2011
(51) Int. Cl.: H01G 9/155, H01M 2/26, H01M 2/34, H01M 10/052, H01M 10/0566, H01M 10/0587

(54) **ENERGY STORAGE DEVICE AND ENERGY STORAGE DEVICE PRODUCTION METHOD**

(30) Priority: 10.11.2010 JP 2010252196; 24.09.2010 JP 2010214049
(71) Applicant: Shin-Kobe Electric Machinery Co., Ltd., Tokyo 104-0044 (JP)
(72) Inventor: HAMA Yoshiki, Tokyo 104-0044 (JP); IIDA Yukio, Tokyo 104-0044 (JP); WAKAMATSU Yoshimi, Tokyo 104-0044 (JP); HOSHI Haruki, Tokyo 104-0044 (JP); SAKURAI Atsushi, Tokyo 104-0044 (JP); TAKAHASHI Akio, Tokyo 104-0044 (JP); UEHARA Hideaki, Tokyo 104-0044 (JP); OHYAMA Mika, Tokyo 104-0044 (JP)
(74) Representative: Calderbank, Thomas Roger
(86) International application number: PCT/JP2011/071907
(87) International publication number: WO 2012/039497

(57) **Abstract**

An electrochemical capacitor that is resistant to vibration is provided. A positive current collecting member 39 is welded to an unapplied portion 25 of a positive electrode 9 included in a wound electrode group 5. An outer peripheral portion 40 of the positive current collecting member 39 is shaped and sized to extend to a position beyond a top portion 3c of an annular projected portion 3a. An insulating ring member 63 is disposed in a compressed state between the positive current collecting member 39 and the annular projected portion 3a and also between the positive current collecting member 39 and the annular projected portion 3a and an annular wall portion 3d of a peripheral wall portion that is continuous with the annular projected portion. This configuration makes it possible to reliably fix an electrode group unit in a container 3 while preventing a short circuit.

## Description

### TECHNICAL FIELD

The present invention relates to an electrical storage device, and in particular to a non-aqueous electrolyte storage device such as a lithium ion capacitor and a lithium ion battery having a large capacity.

### ACKGROUND ART

Non-aqueous electrolyte storage devices such as lithium ion capacitors and lithium ion batteries advantageously have a high energy density, a low self-discharge rate, and good cycle performance. Therefore, in recent years, it has been expected to increase the size or the capacity of the non-aqueous electrolyte storage devices to use such storage devices as power sources for automobiles such as hybrid vehicles and electric vehicles. Some of the non-aqueous electrolyte storage devices used as power sources for automobiles are of a wound type in which a wound electrode group formed by winding positive and negative electrodes via a separator about an axial core is received together with an electrolyte in a bottomed cylindrical container. In the electrical storage devices of this type according to the related art, distal end portions of tabs (current collecting lead pieces) extending from the positive electrode and the negative electrode forming the wound electrode group are joined to current collecting members made of aluminum (positive electrode) or copper (negative electrode), for example.

When strong vibration or a strong impact is applied to the thus structured non-aqueous electrolyte storage device, the electrode group received in the container may be displaced with respect to the container. For a non-aqueous electrolyte storage device mounted on an automobile as a power source for the automobile, in particular, strong vibration and a strong impact applied to or produced by the body of the automobile may be applied to the electrical storage device over a long time. Therefore, in the non-aqueous electrolyte storage devices of the type discussed above in which the tabs are joined to the current collecting members, the joint between the tabs and the current collecting members may be broken to increase the resistance of the connection portion, which may result in degradation in electricity storage performance of the non-aqueous electrolyte storage devices. In some of the non-aqueous electrolyte storage devices according to the related art, an epoxy resin is injected from the bottom surface of the container to cover the current collecting member located close to the bottom surface of the container, as taught in JP 2010-141217 A (Patent Document 1).

### RELATED ART DOCUMENT

### PATENT DOCUMENT

Patent Document 1: JP 2010-141217 A

### SUMMARY OF INVENTION

### TECHNICAL PROBLEM

In the structure according to the related art in which the electrodes and the current collecting members are connected to each other utilizing the tabs, however, the wound electrode group including the electrodes are not fixed to the current collecting members as opposed to the tabs which are fixed to the current collecting members. Therefore, the wound electrode group in the container may be vibrated to break the tabs if strong vibration is continuously applied to the electrical storage device from the outside. Partial breakage of the tabs increases the resistance between the electrode group and the current collecting members, and therefore the electrical storage device may not fully exercise its performance.

In the structure taught in Patent Document 1, in addition, an epoxy resin is injected into the bottom portion of the container for the purpose of electrical insulation. While it seems at a first glance that the electrode group is fixed to the bottom surface of the container, it has been revealed that the epoxy resin is decomposed through reaction with the non-aqueous electrolyte to reduce the reactivity of the non-aqueous electrolyte. Therefore, the epoxy resin taught in Patent Document 1 may not hinder displacement of the electrode group in the container for the electrode group.

An object of the present invention is to provide an electrical storage device that is resistant to vibration from the outside with its electrodes and current collecting members reliably fixed to each other.

Another object of the present invention is to provide a non-aqueous electrolyte storage device with its properties as an electrical storage device not degraded by enhancing its vibration resistance or impact resistance.

### SOLUTION TO PROBLEM

The present invention improves an electrical storage device including: an electrode group unit including a wound electrode group formed by winding a laminated member including a positive electrode in which a positive active material mixture is applied to a first metal foil, a negative electrode in which a negative active material mixture is applied to a second metal foil, and a separator, the positive electrode and the negative electrode being laminated via the separator, a positive current collecting member connected to the positive electrode at one end portion of the wound electrode group, and a negative current collecting member connected to the negative electrode at the other end portion of the wound electrode group; and a bottomed cylindrical container configured to form a terminal of one polarity and to receive the electrode group unit together with a non-aqueous electrolyte infiltrating the wound electrode group. The electrical storage device according to the present invention also includes fixing means for fixing the wound electrode group to the container, the fixing means being configured not to react with the non-aqueous electrolyte. Use of the fixing means that does not react with the non-aqueous electrolyte makes it possible to provide an electrical storage device with its vibration resistance and impact resistance enhanced by fixing the wound electrode group in the container and with its properties as an electrical storage device not degraded.

The electrical storage device according to the present invention includes an electrode group unit including a wound electrode group, a positive current collecting member, and a negative current collecting member, and a bottomed cylindrical container. The wound electrode group is formed by winding a laminated member including a positive electrode, a negative electrode, and a separator, the positive electrode having an applied layer formed by applying a positive active material mixture to a first metal foil and an unapplied portion on which the positive active material mixture is not applied along the applied layer of the positive active material mixture, the negative electrode having an applied layer formed by applying a negative active material mixture to a second metal foil and an unapplied portion on which the negative active material mixture is not applied along the applied layer of the negative active material mixture, and the positive electrode and the negative electrode being laminated via the separator such that the unapplied portion of the positive electrode and the unapplied portion of the negative electrode project in directions opposite to each other. The electrode group unit also includes the positive current collecting member welded to the unapplied portion of the positive electrode, the unapplied portion projecting beyond the separator at one end portion of the wound electrode group, and the negative current collecting member welded to the unapplied portion of the negative electrode, the unapplied portion projecting beyond the separator at the other end portion of the wound electrode group.

A container is configured to form a terminal of one polarity and to receive the electrode group unit. An annular projected portion is formed a predetermined distance away from an opening portion of the container toward a bottom portion of the container to be projected inwardly of the container over the entire periphery of the container. A lid member configured to form a terminal of the other polarity is disposed as electrically insulated from the container between an annular retaining portion and the annular projected portion, the retaining portion being formed by radially inwardly crimping an annular wall portion of the container adjacent to the opening portion.

In the electrical storage device according to the present invention, one of the positive current collecting member and the negative current collecting member that is electrically connected to the lid member is disposed near the annular projected portion and shaped and sized such that an outer peripheral portion of the one current collecting member is located closer to a peripheral wall portion of the container than a top portion of the annular projected portion is located. An electrically insulating member configured to electrically insulate the one current collecting member and the container from each other is disposed in a compressed state between an annular wall portion of the annular projected portion and the outer peripheral portion of the one current collecting member, and also between the peripheral wall portion continuous with the annular projected portion and the outer peripheral portion of the one current collecting member.

For example, if the lid member serves as the positive electrode, the current collecting member electrically connected to the lid member serves as the positive current collecting member. In this case, the positive current collecting member is disposed near the annular projected portion and shaped and sized such that an outer peripheral portion of the positive current collecting member is located closer to a peripheral wall portion of the container than a top portion of the annular projected portion is located. The electrically insulating member is disposed in a compressed state between an annular wall portion of the annular projected portion and the outer peripheral portion of the positive current collecting member, and also between the peripheral wall portion continuous with the annular projected portion and the outer peripheral portion of the positive current collecting member in order to electrically insulate the container forming the negative electrode and the positive current collecting member from each other.

According to this configuration, first, the area of one of the current collecting members that is electrically connected to the lid member can be increased. Therefore, the current collecting member and the unapplied portion of the wound electrode group can be directly welded to each other by semiconductor laser welding or the like without using tabs, which enables the electrode group unit to be handled as a substantially integral unit. Then, the current collecting member is fixed to the container with the electrically insulating member disposed in a compressed state, as a result of which the electrode group unit is reliably fixed in the container. Thus, according to the present invention, the electrode group unit in the container is not significantly vibrated even if vibration is applied from the outside, thereby obtaining an electrical storage device that is resistant to vibration.

The container may have any configuration on the bottom portion side. If the bottom portion of the container includes an annular bottom wall portion continuous with the peripheral wall portion of the container and a protruded portion continuous with the annular bottom wall portion and protruded in a direction away from the lid member in order to increase the strength of the container, the other of the positive current collecting member and the negative current collecting member that is electrically connected to the bottom portion is preferably shaped and sized such that an outer peripheral portion of the other current collecting member is located closer to the peripheral wall portion of the container than an inner edge portion of the annular bottom wall portion is located. According to this configuration, the electrode group unit is held between the annular projected portion discussed earlier and the annular bottom wall portion of the container. This improves resistance to external vibration.

The present invention improves an electrical storage device including an electrode group unit, a bottomed cylindrical container, a lid member, and a non-aqueous electrolyte. The electrode group unit includes a wound electrode group formed by winding a laminated member including a positive electrode with a plurality of tabs, a separator, and a negative electrode with a plurality of tabs, a positive current collecting member, and a negative current collecting member. The positive current collecting member is disposed close to one end of the wound electrode group and connected to the plurality of tabs of the positive electrode included in the wound electrode group. The negative current collecting member is disposed close to the other end of the wound electrode group and connected to the plurality of tabs of the negative electrode included in the wound electrode group. The container has an opening portion at one end portion and receives the electrode group unit inside. The lid member blocks the opening portion of the container. The non-aqueous electrolyte infiltrates the wound electrode group received in the container. In the present invention, at least an outer peripheral surface of the wound electrode group and an inner wall surface of the container are joined to each other by a resin material that does not react with the non-aqueous electrolyte. The outer peripheral surface of the wound electrode group and the inner wall surface of the container may be partially or entirely joined to each other by the resin material that does not react with the non-aqueous electrolyte. According to this configuration, the resin material between the outer peripheral surface of the wound electrode group and the inner wall surface of the container function as an adhesive to prevent the wound electrode group from being displaced with respect to the container. Therefore, the connection between the current collecting members fixed to the container and the tabs of the positive electrode or the tabs of the negative electrode is not broken. In addition, since the resin material used does not react with the non-aqueous electrolyte, the bonding strength of the joint portion made of the resin material is not reduced. Moreover, the reactivity of the non-aqueous electrolyte is not reduced, or the properties of the electrical storage device are not degraded. Thus, according to the present invention, an electrical storage device with its properties not degraded by enhancing its vibration resistance or impact resistance can be provided. The resin material that does not react with the non-aqueous electrolyte and which joins at least the outer peripheral surface of the wound electrode group and the inner wall surface of the container to each other can also be applied to electrical storage devices including a wound electrode group having no tabs in which the current collecting members and the unapplied portions of the wound electrode group are directly welded to each other.

A portion of the electrode group unit and the bottom portion of the container or the like may be further joined to each other by the resin material that does not react with the non-aqueous electrolyte. In this case, the resin material that does not react with the non-aqueous electrolyte is accumulated between a portion of the electrode group unit located close to the bottom portion of the container and the bottom portion of the container and also between the portion of the electrode group unit and a part of the inner wall surface of the container leading to the bottom portion of the container. Then, the resin material between the bottom portion of the container and a part of the inner wall surface of the container leading to the bottom portion of the container is cured. This increases the area over which the wound electrode group and the container are joined to each other by the resin material. In addition, since the resin material is cured, the wound electrode group is fixed by the cured resin. Thus, displacement of the wound electrode group with respect to the container can be further reduced.

The resin material may join a portion of the electrode group unit and the opening portion of the container or the like to each other. In this case, the resin material may be accumulated between a portion of the electrode group unit located close to the opening portion of the container and the opening portion and also between the portion of the electrode group unit and a part of the inner wall surface of the container leading to the opening portion to be cured.

The resin material that does not react with the non-aqueous electrolyte is preferably a fluorine-based resin material. The term "fluorine-based resin" refers to synthetic resins (fluorine resins) obtained by polymerizing an olefin containing fluorine and resins containing fluorine having similar nature. Studies by the inventors have revealed that the fluorine-based resin is a material that does not particularly react with the non-aqueous electrolyte, and that the fluorine-based resin is not degraded in durability even if immersed in the non-aqueous electrolyte after being cured. The fluorine-based resin, which does not react with the non-aqueous electrolyte, does not affect the properties of the electrical storage device. Therefore, use of the fluorine-based resin for joint makes it possible to obtain high vibration resistance and impact resistance, and to maintain the properties of the electrical storage device. Other examples of the resin material that does not react with the non-aqueous electrolyte include a polypropylene-based resin material, a polyethylene-based resin material, and polyphenylene sulfide.

In order to manufacture the electrical storage device according to the present invention, for example, an electrode group unit including a wound electrode group formed by winding a laminated member including a positive electrode with a plurality of tabs, a separator, and a negative electrode with a plurality of tabs, a positive current collecting member disposed close to one end of the wound electrode group and connected to the plurality of tabs of the positive electrode included in the wound electrode group, and a negative current collecting member disposed close to the other end of the wound electrode group and connected to the plurality of tabs of the negative electrode included in the wound electrode group is prepared in advance. In addition, a bottomed cylindrical container having an opening portion at one end portion and receiving the electrode group unit inside and a lid member that blocks the opening portion of the container are prepared in advance. First, a resin material that does not react with a non-aqueous electrolyte is applied to a part of an inner wall surface of the container. After the applying step, the electrode group unit is inserted into the container from the opening portion, and the resin material is cured. Then, one of the positive current collecting member and the negative current collecting member, and the container are electrically connected to each other, and the other of the positive current collecting member and the negative current collecting member, and the lid member are electrically connected to each other. After the completion of the electrically connecting steps, the opening portion is sealed with the lid member. After the sealing step, the non-aqueous electrolyte is injected from a liquid injection port. If the electrical storage device is manufactured in this way, when the electrode group unit is inserted into the container from the opening portion, the resin material applied to the inner wall surface of the container contacts the outer peripheral surface of the wound electrode group so that the resin material is spread between the inner wall surface of the container and the outer peripheral surface of the wound electrode group. If an increased amount of the resin material is applied to the inner wall surface of the container, the resin material is scraped down to a space around a portion of the electrode group unit located close to the bottom portion of the container. Then, the resin material which has been scraped down is accumulated between the bottom portion of the container and a part of the inner wall surface of the container leading to the bottom portion of the container. As a result, the resin material that does not react with the non-aqueous electrolyte can reliably join the inner wall surface of the container and the outer peripheral surface of the electrode group unit to each other, and the bottom portion of the container and a part of the inner wall surface of the container leading to the bottom portion of the container to each other.

Rather than the configuration in which the electrode group and the container are joined to each other by the resin material that does not react with the non-aqueous electrolyte, a portion across a part of the current collecting member and a part of the wound electrode group may be surrounded in a tightened state by a shrink tube formed from a material that does not react with the non-aqueous electrolyte. Specifically, a portion across a part of the positive current collecting member and a part of the wound electrode group is surrounded in a tightened state by a first shrink tube formed from a material that does not react with the non-aqueous electrolyte, and a portion across a part of the negative current collecting member and a part of the wound electrode group is surrounded in a tightened state by a second shrink tube formed from a material that does not react with the non-aqueous electrolyte. According to this configuration, a portion across a part of the current collecting member and a part of the wound electrode group is tightened by the shrink tube, and thus the tabs provided at an end portion of the wound electrode group are not moved away from the current collecting member. Thus, the connection between the current collecting member and the tabs of the positive electrode or the negative electrode is not easily broken. If a layer of a metal to be occluded by the positive electrode or the negative electrode in a pre-use process is disposed in the wound electrode group, in particular, a void is to be formed in a portion of the wound electrode group at which the occluded metal has been provided. When a void is formed in the wound electrode group, winding of the wound electrode group is loosened. Therefore, turns of the laminated member forming the wound electrode group become easily movable with respect to each other, and become easily displaceable with respect to the container. However, if a portion across a part of the current collecting member and a part of the wound electrode group is tightened by the shrink tube formed from a material that does not react with the non-aqueous electrolyte, the turns of the laminated member forming the wound electrode group are pressed by the shrink tube, and the void formed in the wound electrode group is eliminated. This makes it possible to prevent the turns of the laminated member forming the wound electrode group from being displaced with respect to the container, and thus the connection between the current collecting member and the tabs of the positive electrode or the tabs of the negative electrode is not easily broken.

The configuration in which a portion across a part of the positive current collecting member and a part of the wound electrode group is surrounded in a tightened state by the first shrink tube formed from a material that does not react with the non-aqueous electrolyte and in which a portion across a part of the negative current collecting member and a part of the wound electrode group is surrounded in a tightened state by the second shrink tube formed from a material that does not react with the non-aqueous electrolyte may also be applied to electrical storage devices having no tabs in which the current collecting members and the unapplied portions of the wound electrode group are directly welded to each other.

The resin material that does not react with the non-aqueous electrolyte may be a thermoplastic resin. The thermoplastic resin can be heated to be softened and cooled to be cured more rapidly than a solvent-based or two-part resin material, which facilitates manufacture of electrical storage devices to result in a high productivity.

The thermoplastic resin material that does not react with the non-aqueous electrolyte is preferably polypropylene, polyethylene, or a resin containing a high percentage of polypropylene or polyethylene. Studies by the inventors have revealed that addition agents such as oil and wax react with the non-aqueous electrolyte to be eluted or degraded in durability. Polypropylene, polyethylene, and a resin containing a high percentage of polypropylene or polyethylene do not react with the non-aqueous electrolyte, and therefore does not affect the properties of the electrical storage device. Therefore, use of polypropylene, polyethylene, or a resin containing a high percentage of polypropylene or polyethylene for joint makes it possible to provide a high productivity, to obtain high vibration resistance and impact resistance, and to maintain the properties of the electrical storage device. Other examples of the resin material that does not react with the non-aqueous electrolyte include polyphenylene sulfide.

If the positive electrode and the negative electrode each have a plurality of tabs, the thermoplastic resin material that does not react with the non-aqueous electrolyte may join the tabs of the positive electrode to each other, or may further join the tabs of the positive electrode and the positive current collecting member to each other. Alternatively, the thermoplastic resin material that does not react with the non-aqueous electrolyte may join the tabs of the negative electrode to each other, or may further join the tabs of the negative electrode and the negative current collecting member to each other. In this case, the tabs can be easily joined to each other, or the tabs and the current collecting member can be easily joined to each other, by softening the resin material around the tabs of the wound electrode group and thereafter solidifying the resin material. Consequently, the tabs are fixed as being surrounded by the resin material, thereby preventing the tabs from being broken.

In order to manufacture such an electrical storage device, an electrode group unit including a wound electrode group formed by winding a laminated member including a positive electrode with a plurality of tabs, a separator, and a negative electrode with a plurality of tabs, a positive current collecting member disposed close to one end of the wound electrode group and connected to the plurality of tabs of the positive electrode included in the wound electrode group, and a negative current collecting member disposed close to the other end of the wound electrode group and connected to the plurality of tabs of the negative electrode included in the wound electrode group is prepared in advance. In addition, a bottomed cylindrical container having an opening portion at one end portion and receiving the electrode group unit inside and a lid member that blocks the opening portion of the container are prepared in advance.

Then, the electrode group unit is inserted into the container from the opening portion. Next, one of the positive current collecting member and the negative current collecting member, and the container are electrically connected to each other, and the other of the positive current collecting member and the negative current collecting member, and the lid member are electrically connected to each other. Then, a thermoplastic resin material that does not react with a non-aqueous electrolyte is put into the container from the opening portion to dispose the thermoplastic resin material on an inner wall surface of the container and around a part of the wound electrode group and the tabs. After the putting step, the thermoplastic resin material is heated to soften the thermoplastic resin material, and the thermoplastic resin material is returned to normal temperature to solidify the thermoplastic resin material. Lastly, the opening portion is sealed with the lid member, and thereafter the non-aqueous electrolyte is injected from a liquid injection port. If the electrical storage device is manufactured in this way, the inner wall surface of the container and the electrode group unit and the tabs can be reliably joined to each other by the resin material that does not react with the non-aqueous electrolyte just by applying and radiating heat to and from the thermoplastic resin.

In order to manufacture an electrical storage device according to the present invention, a thermoplastic resin material that does not react with a non-aqueous electrolyte may be disposed at a bottom portion of the container. In this case, the electrode group unit is inserted into the container from the opening portion, and the bottom portion of the container is heated to soften the thermoplastic resin material. Then, one of the positive current collecting member and the negative current collecting member, and the container are electrically connected to each other, and the thermoplastic resin material that does not react with the non-aqueous electrolyte is returned to normal temperature to solidify the thermoplastic resin material. After that, the other of the positive current collecting member and the negative current collecting member, and the lid member are electrically connected to each other. Lastly, the opening portion is sealed with the lid member, and thereafter the non-aqueous electrolyte is injected from a liquid injection port.

A thermoplastic resin material that does not react with a non-aqueous electrolyte may be disposed at a bottom portion of the container. In this case, the electrode group unit is inserted into the container from the opening portion, and one of the positive current collecting member and the negative current collecting member, and the container are electrically connected to each other. Then, the bottom portion of the container is heated to soften the thermoplastic resin material that does not react with the non-aqueous electrolyte, and the thermoplastic resin material that does not react with the non-aqueous electrolyte is returned to normal temperature to solidify the thermoplastic resin material. Next, the other of the positive current collecting member and the negative current collecting member, and the lid member are electrically connected to each other. Lastly, the opening portion is sealed with the lid member, and thereafter the non-aqueous electrolyte is injected from a liquid injection port.

### BRIEF DESCRIPTION OF DRAWINGS

Fig. 1A is a plan view of a lithium ion capacitor according to a first embodiment of the present invention, and Fig. 1B is a cross-sectional view taken along the line IB-IB of Fig. 1A.
Fig. 2 shows a wound electrode group according to the present invention as developed.
Figs. 3A and 3B show examples of a positive electrode and a negative electrode used in the first embodiment.
Figs. 4A and 4B show an example of a lithium metal support member used in the first embodiment.
Fig. 5 shows an example of a positive current collecting member used in the first embodiment.
Fig. 6 shows an example of a negative current collecting member according to the present invention.
Fig. 7 shows a combination of the wound electrode group, the positive current collecting member, and the negative current collecting member according to the first embodiment.
Figs. 8A and 8B show a state in which a current collecting member and an electrode according to the first embodiment are welded to each other.
Fig. 9A is a cross-sectional view showing the region A of Fig. 1B as enlarged, and Fig. 9B is a cross-sectional view showing the region B of Fig. 1B as enlarged.
Fig. 10 is a cross-sectional view showing the region C of Fig. 1B as enlarged.
Fig. 11 shows a state in which an electrode group unit is received in a container and the container is tightly sealed with a container lid.
Fig. 12 is a partial cross-sectional view of a lithium ion capacitor according to a second embodiment of the present invention.
Fig. 13 schematically shows a state of a wound electrode group before being wound.
Figs. 14A and 14B are a partial cross-sectional view of a lithium ion capacitor according to a third embodiment of the present invention.
Fig. 15 shows the conditions for a vibration test.
Fig. 16 shows the results of the vibration test.
Fig. 17 shows the results of the vibration test.
Fig. 18 shows the vibration direction for the vibration test.
Fig. 19 is a partial cross-sectional view of a lithium ion capacitor according to a fourth embodiment of the present invention.
Fig. 20 schematically shows a state of a wound electrode group before being wound.
Fig. 21 is a partial cross-sectional view of a lithium ion capacitor according to a fifth embodiment of the present invention.
Fig. 22 shows the conditions for a vibration test.
Fig. 23 shows the results of the vibration test.
Fig. 24 shows the results of the vibration test.
Fig. 25 shows the vibration direction for the vibration test.
Fig. 26 is a partial cross-sectional view of a lithium ion capacitor according to a sixth embodiment of the present invention.

### DESCRIPTION OF EMBODIMENTS

A cylindrical lithium ion capacitor according to a first embodiment of the present invention will be described below with reference to the drawings.

### (Configuration of First Embodiment)

### <Overall Configuration>

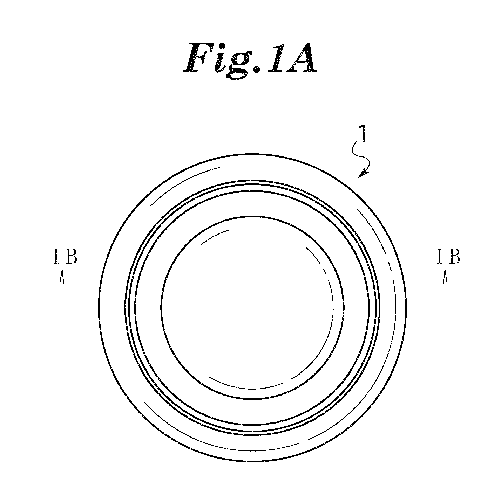

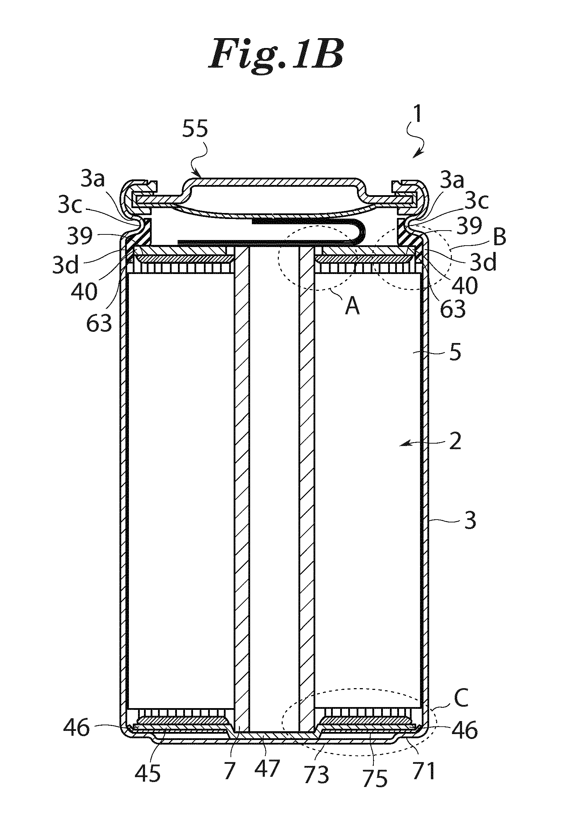

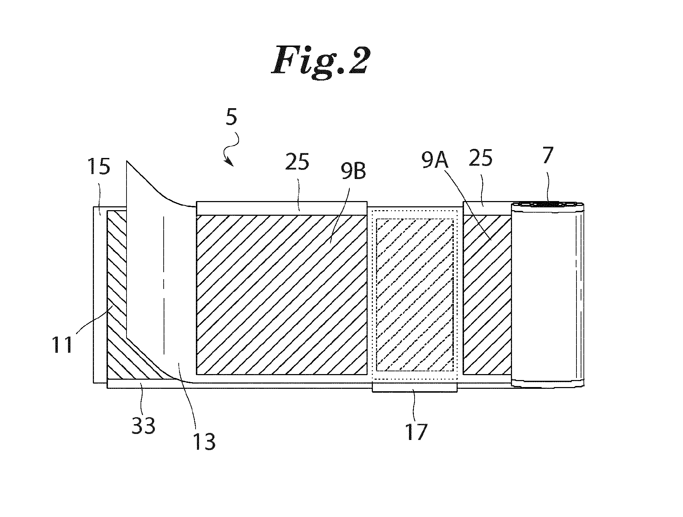

Fig. 1A is a plan view of a lithium ion capacitor 1 (hereinafter simply referred as "capacitor 1") according to the first embodiment with a positive electrode facing up, and Fig. 1B is a cross-sectional view taken along the line IB-IB of Fig. 1A. In Fig. 1B, the cross-sectional shape of a wound electrode group 5 is not shown, and cross-sectional portions are not hatched. The capacitor 1 includes a container (can) 3 made of steel plated with nickel and having the shape of a bottomed cylinder. An electrode group unit 2 is received in the container 3. The electrode group unit 2 is a combination of the wound electrode group 5, a positive current collecting member 39, and a negative current collecting member 45. As shown in Figs. 1B and 2, the wound electrode group 5 is formed by winding a positive electrode 9 and a negative electrode 11 in a belt shape around a hollow cylindrical axial core 7 made of polypropylene via a first separator 13 and a second separator 15. As shown in Fig. 2, a lithium metal support member 17 including lithium metal is disposed in the wound electrode group 5 before doping. The positive electrode 9 is formed from two divided positive electrodes 9A, 9B. The first and second separators 13, 15 may be a porous base material such as kraft paper.

As shown in Fig. 1B, an outer peripheral portion 40 of the positive current collecting member 39 is shaped and sized to extend to a position beyond a top portion 3c of an annular projected portion 3a. An insulating ring member 63 is disposed in a compressed state between the positive current collecting member 39 and the annular projected portion 3a and an annular wall portion 3d of a peripheral wall portion that is continuous with the annular projected portion. In the embodiment, the positive current collecting member 39 and the insulating ring member 63 form fixing means.

As shown in Fig. 1B, the bottom portion of the container 3 includes an annular bottom wall portion 71 and a protruded portion 73 to enhance the strength of the container 3. The negative current collecting member 45 is shaped and sized such that an outer peripheral portion 46 is located closer to the peripheral wall portion of the container 3 than the inner edge portion of the annular bottom wall portion 71 is located. Thus, the negative current collecting member 45 contacts the container 3 not only at a dent 47 but also at the outer peripheral portion 46, which allows the electrode group unit 2 to be reliably fixed in a well balanced manner. In the embodiment, the negative current collecting member 45 contacts the annular bottom wall portion 71 via an insulating member 75 so that a part of a current is not diverted to the annular bottom wall portion 71 and the outer peripheral portion 46 of the negative current collecting member 45 when a current is applied in a spot welding process for electrically connecting the dent 47 to the bottom portion (protruded portion 73) of the container. The intervention of the insulating member 75 also prevents peeling of nickel plating on the container 3.

### <Positive Electrode>

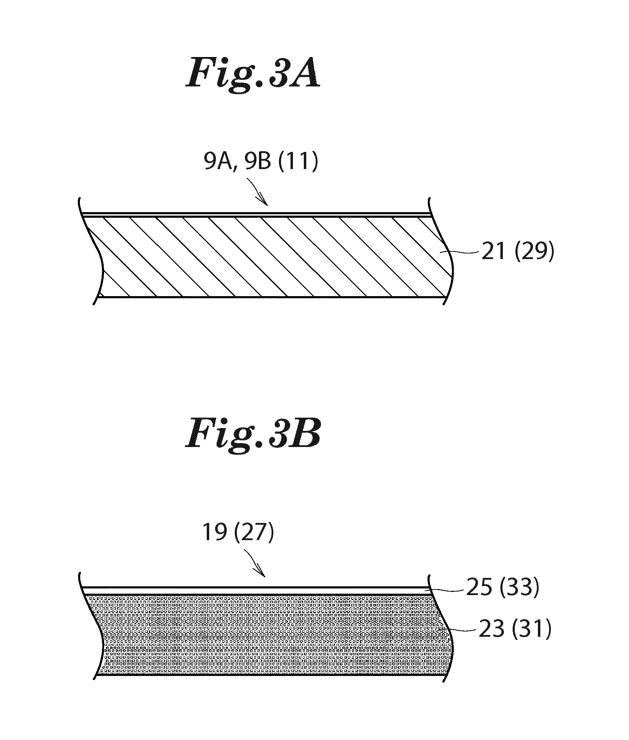

The divided positive electrodes 9A, 9B forming the positive electrode 9 have the same structure as each other except for the length. As shown in Figs. 3A and 3B, the divided positive electrodes 9A, 9B are formed by applying a positive active material mixture 21 to both surfaces of an aluminum foil (positive current collector) 19, for example. Herein, the aluminum foil 19 includes an aluminum alloy foil. The positive active material mixture 21 may be a mixture of activated carbon, a binding agent such as an acrylic binder, and a dispersing agent made of carboxymethyl cellulose (CMC), for example. The aluminum foil 19 includes an applied portion 23 in which a multiplicity of through holes are formed and on which the positive active material mixture 21 is applied, and an unapplied portion 25 which is formed along the longitudinal direction of the applied portion 23 and in which through holes are not formed. The positive active material mixture 21 is applied to the applied portion 23 over a length less than the length of the applied portion 23 in the width direction. That is, the unapplied portion 25 of the aluminum foil 19 remains exposed along the layer of the positive active material mixture 21.

### <Negative Electrode>

The negative electrode 11 has a structure similar to that of the divided positive electrodes 9A and 9B shown in Fig. 3A and 3B. That is, in the negative electrode 11, a negative active material mixture 29 is applied to both surfaces of a copper foil (negative current collector) 27. Herein, the copper foil includes not only a pure copper foil but also a copper alloy foil. The negative active material mixture 29 may be a mixture of amorphous carbon capable of occluding and releasing lithium ions, a binding agent made of polyvinylidene fluoride (PVDF), and a conductive assistance such as acetylene black, for example. The copper foil 27 includes an applied portion 31 in which a multiplicity of through holes are formed, and an unapplied portion 33 which is formed along the longitudinal direction of the applied portion 31 and in which through holes are not formed. The negative active material mixture 29 is applied to the applied portion 31 over a length less than the length of the applied portion 31 in the width direction. That is, the unapplied portion 33 of the copper foil 27 remains exposed along the layer of the negative active material mixture 29.

### <Lithium Metal Support Member>

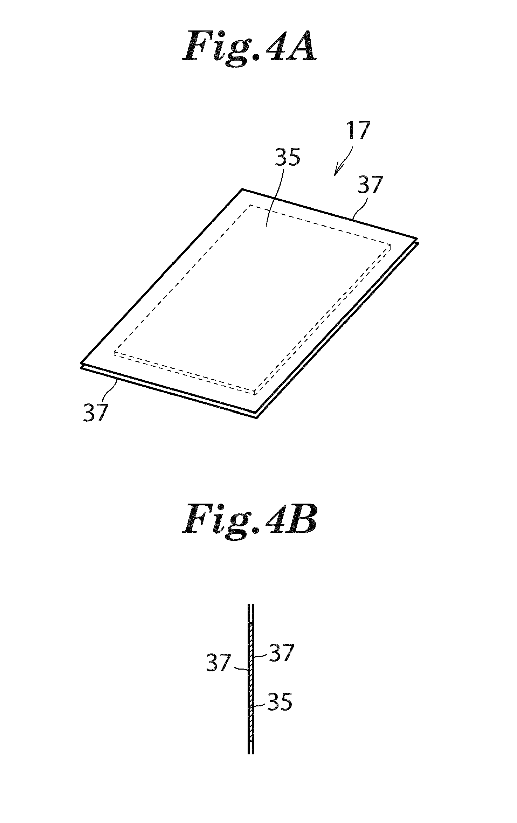

The lithium metal support member 17 causes the negative active material (in the embodiment, amorphous carbon) of the negative electrode 11 to occlude (be doped with) lithium ions. As shown in Figs. 4A and 4B, the lithium metal support member 17 includes lithium metal 35 having a thin plate shape and two copper foils (support members) 37, 37. The copper foils 37, 37 may be obtained by cutting the same material as that for the copper foil 27 forming the negative electrode 11 into predetermined dimensions. A multiplicity of through holes (not shown) are formed in the copper foils 37, 37. The lithium metal 35 is sandwiched between the two copper foils 37, 37 to contact portions of the two copper foils 37 in which the multiplicity of through holes are formed.

### <Wound Electrode Group>

As shown in Fig. 2, the wound electrode group 5 is formed by winding the positive electrode 9 (divided positive electrodes 9A, 9B) and the negative electrode 11 via the two separators 13, 15 into a swirling shape in cross section about the axial core 7 such that the positive electrode 9 and the negative electrode 11 do not directly contact each other. The lithium metal support member 17 is disposed on the negative electrode 11 such that a layer in which the lithium metal support member 17 is wound is located in a radially middle region of the wound electrode group 5. The positive electrode 9 and the negative electrode 11 are disposed such that their respective unapplied portions (25 and 33) project outside of the separators 13, 15 in directions opposite to each other. A winding end portion of the wound electrode group 5 is fixed by affixing an adhesive tape across the winding end portion and the outer peripheral surface of the wound electrode group 5 to prevent unwinding of the wound electrode group 5.

### <Positive Current Collecting Member>

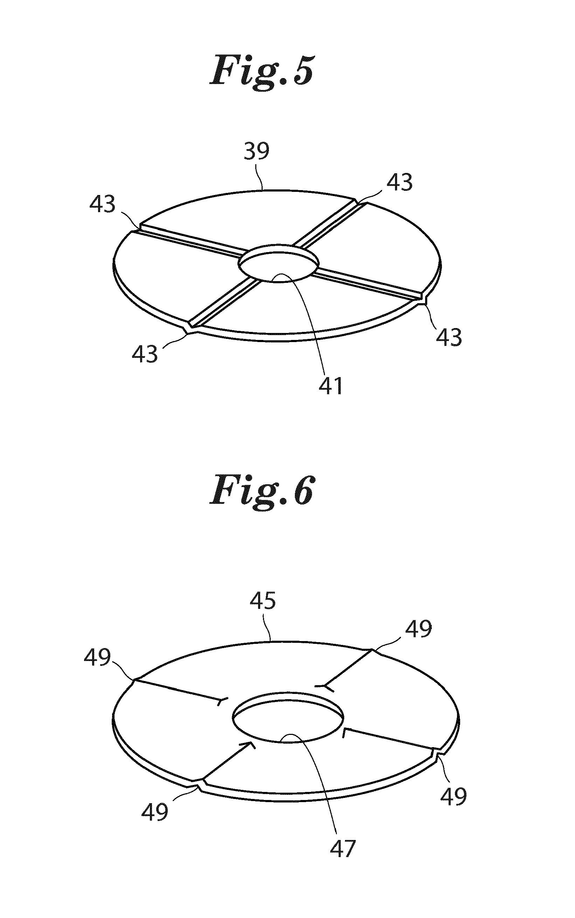

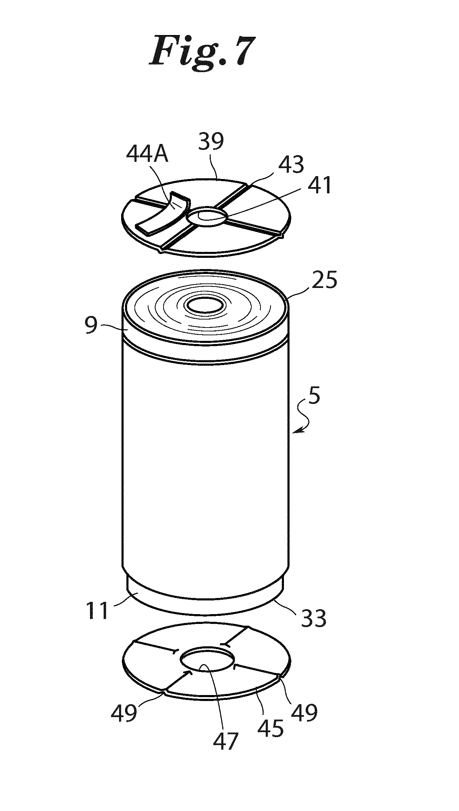

The positive current collecting member 39 is made of aluminum (including an aluminum alloy), and has a ring shape in which a circular hole 41 is formed in the center portion as shown in Fig. 5. As shown in Fig. 1B, the hole 41 has a diameter that allows the positive current collecting member 39 to be fitted with the upper end of the axial core 7 to prevent the positive current collecting member 39 from being displaced from the center of the wound electrode group 5. The positive current collecting member 39 is welded to the unapplied portion 25 of the positive electrode 9 included in the wound electrode group 5. Thus, as shown in Fig. 7, the positive current collecting member 39 is moved closer toward the wound electrode group 5 from above the side of the wound electrode group 5 where the unapplied portion 25 of the positive electrode 9 is located, so that the positive current collecting member 39 is placed on the unapplied portion 25 of the aluminum foil 19 of the positive electrode 9. Then, the unapplied portion 25 and the positive current collecting member 39 are welded to each other by laser welding to be discussed later. For laser welding, the positive current collecting member 39 is provided with four grooves 43 that form recessed portions for welding that are convex toward the wound electrode group 5 and that are open in the direction opposite to the wound electrode group 5. The grooves 43 are formed by pressing, and extend linearly radially from the imaginary center point of the positive current collecting member 39. A positive terminal portion 44A welded to the positive current collecting member 39 as shown in Fig. 7 is to be welded to a container lid 55 shown in Fig. 1B. During assembly, an insulating ring member made of rubber is mounted on the outer peripheral portion of the positive current collecting member 39 for electrical insulation from the container 3 as shown in Fig. 1B.

### <Negative Current Collecting Member>

The negative current collecting member 45 is made of either nickel or a metal material obtained by plating copper with nickel. In the embodiment, the negative current collecting member 45 is made of a metal material obtained by plating copper with nickel. As shown in Fig. 6, the negative current collecting member 45 has a disk shape in which a circular dent 47 is formed in the center portion. The dent 47 is formed to receive the lower end of the axial core 7. As shown in Fig. 7, the negative current collecting member 45 is moved closer toward the wound electrode group 5 from the side of the wound electrode group 5 where the unapplied portion 33 of the copper foil of the negative electrode 11 is located, so that the negative current collecting member 45 is placed on the unapplied portion 33 of the copper foil 27. Then, the negative current collecting member 45 and the unapplied portion 33 of the copper foil 27 are welded to each other by laser welding. As with the positive current collecting member 39, the negative current collecting member 45 is also provided with four grooves 49 that form recessed portions for welding that are convex toward the wound electrode group 5 and that are open in the direction opposite to the wound electrode group 5. The grooves 49 are formed by pressing, and extend linearly radially from the imaginary center point of the negative current collecting member 45.

### <Welding between Wound Electrode Group and Current Collecting Members>

Laser light is used to weld the unapplied portions 25 and 33 of the wound electrode group 5 and the current collecting members (positive current collecting member 39 and negative current collecting member 45) to each other. In the embodiment, a direct-collecting semiconductor laser device (DLL, not shown) that continuously generates laser light is used as a laser welding device. Welding of the negative current collecting member 45 will be described as an example. The negative current collecting member 45 is locally melted by continuously applying laser light generated by the direct-collecting semiconductor laser device along the grooves 49 of the negative current collecting member 45 from the outer peripheral side toward the center portion of the negative current collecting member 45, to weld the unapplied portion 33 of the copper foil 27 of the negative electrode and end portions of the support members 37 and the negative current collecting member 45 to each other with a molten metal. Performing laser welding using the direct-collecting semiconductor laser device as in the embodiment allows the negative current collecting member 45 to be efficiently melted, enables reliable welding, and reliably prevents an increase in resistance of the welded portion. Use of a fiber-guided semiconductor laser device in place of the direct-collecting semiconductor laser device also achieves good welding results.

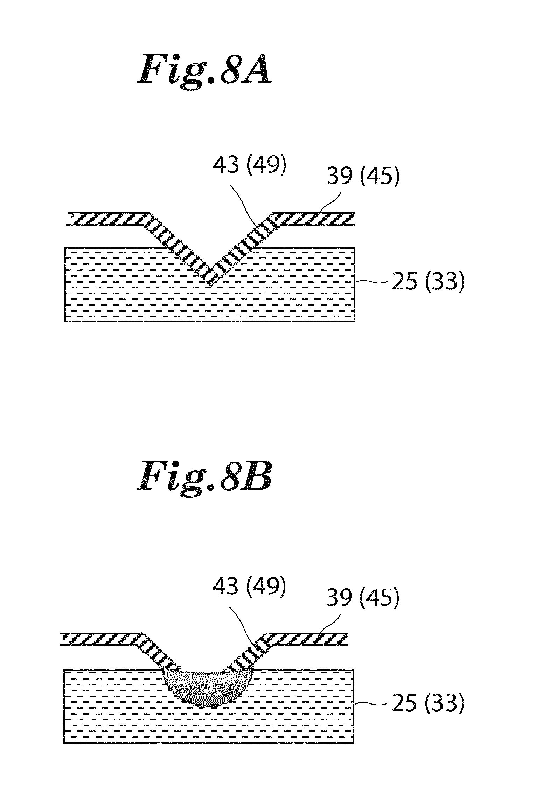

Figs. 8A and 8B are a cross-sectional view before welding and a cross-sectional view after welding, respectively, showing the positive current collecting member 39 and the unapplied portion 25 of the aluminum foil of the positive electrode 9 in cross section orthogonal to the groove 43. In the state before welding shown in Fig. 8A, the positive current collector made of the aluminum foil has been deformed by the tip of an angled convex thread formed by forming the groove 43 of the positive current collecting member 39. In the state shown in Fig. 8B in which welding is completed, a portion of the positive current collecting member 39 at the bottom portion of the groove 43 has been melted to weld the unapplied portion 25 of the aluminum foil of the positive electrode 9 and the positive current collecting member 39 to each other with a molten metal.

The negative current collecting member 45 and the unapplied portion 33 of the negative electrode 11 are also welded to each other in the same manner. That is, the negative current collecting member 45 is melted to weld the unapplied portion 33 of the negative electrode 11 and the negative current collecting member 45 to each other with a molten metal. As discussed later, respective ends of the support members 37, 37 forming the lithium metal support member 17 are also welded to the negative current collecting member 45 in the same manner.

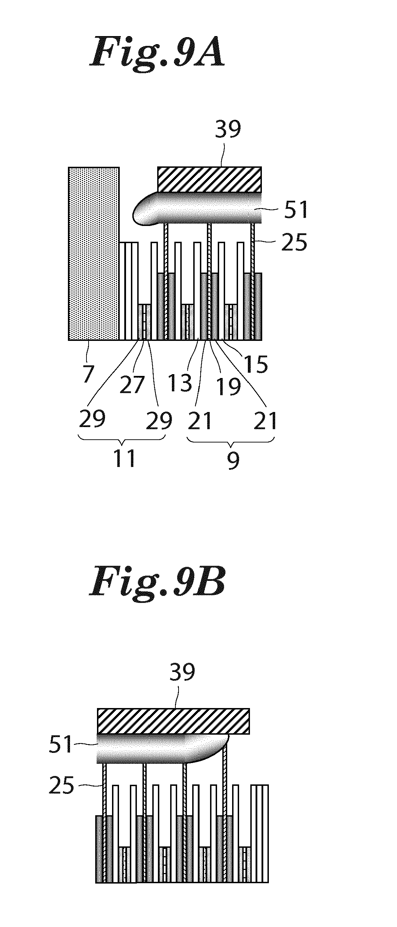

Fig. 9A is a cross-sectional view showing the region A of Fig. 1 as enlarged. Fig. 9A shows a state in which the positive current collecting member 39 and the unapplied portion 25 of the positive electrode are welded to each other such that the molten metal extends to the vicinity of the axial core 7. Fig. 9B shows the region B of Fig. 1 as enlarged. Fig. 9B shows a state in which the positive current collecting member 39 and the unapplied portion 25 of the aluminum foil 19 are welded to each other in the vicinity of the wall surface of the container 3. In Figs. 9A and 9B, some members are not shown, and the number of layers in the wound electrode group 5 may be different from the actual number. In the embodiment, welding is performed while moving laser light from the container 3 side toward the center. As a result, a welding bead is formed to extend toward the axial core 7 as shown in Fig. 9B when a molten metal 51 is cured. Therefore, the molten metal 51 does not extend toward the container 3 beyond the outermost peripheral surface of the wound electrode group 5. As a result, the cured molten metal 51 does not contact the wall surface of the container 3 to cause a short circuit.

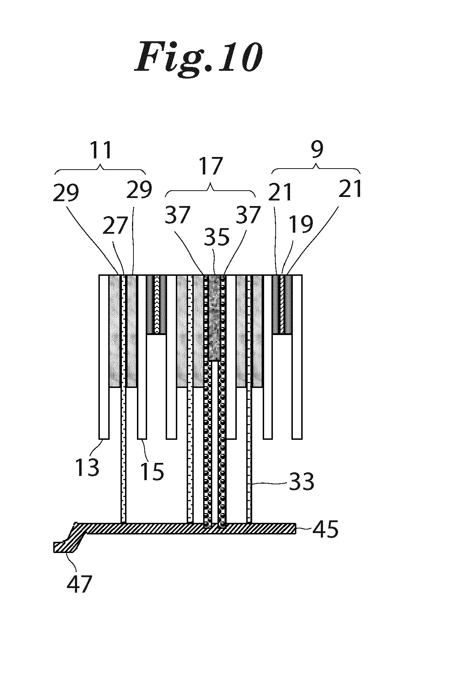

Fig. 10 is a cross-sectional view showing the region C of Fig. 1 as enlarged. Fig. 10 shows a state in which the negative current collecting member 45 and the unapplied portion 33 of the copper foil 27 are welded to each other. In Fig. 10, some members such as the axial core 7 and a molten metal 53 are not shown, and the number of layers in the wound electrode group 5 may be different from the actual number. In the embodiment, as is clear from Fig. 10, not only the unapplied portion 33 of the copper foil 27 but also the support members 37, 37 forming the lithium metal support member 17 are welded to the negative current collecting member 45. The end portions of the support members 37, 37 are configured such that the length of projection of the end portions of the support members 37, 37 from the separators 13, 15 is larger than the length of projection of the unapplied portion 33 from the separators 13, 15. This configuration allows more reliable welding between the negative current collecting member 45 and the support members 37, 37, and allows the lithium metal 35 to be reliably occluded without increasing the resistance value of the welded portion. Since the support members 37, 37 are also welded, the remaining support members 37, 37 can be prevented from slipping off after the lithium metal 35 is occluded.

### <Accommodation of Wound Electrode Group into Container>

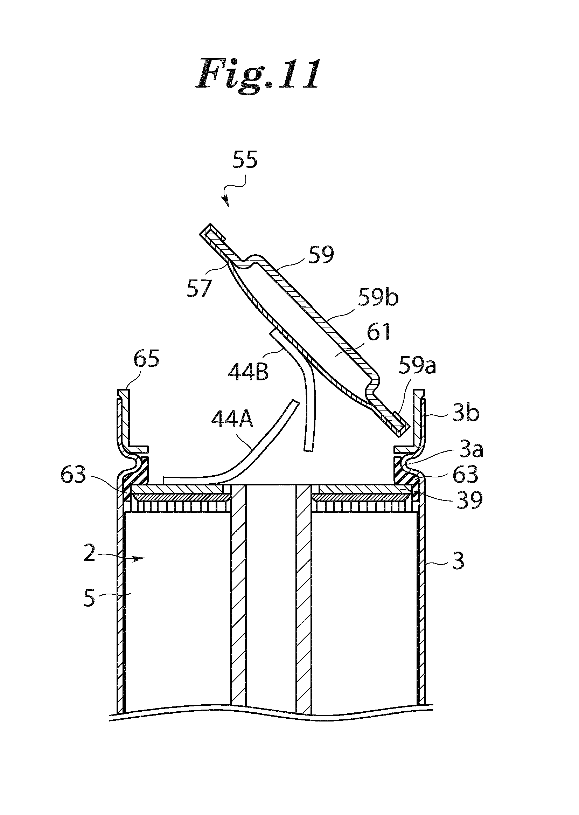

As shown in Fig. 11, the wound electrode group 5 to which the current collecting members have been welded, that is, the electrode group unit 2, is received in the container 3. With the electrode group unit 2 received in the container 3, the dent 47 of the negative current collecting member 45 and the bottom portion (protruded portion 73) of the container 3 are welded to each other by spot welding for electrical connection.

An insulating ring member 63 for electrical insulation between the positive current collecting member 39 and the container 3 is attached to the outer peripheral portion of the positive current collecting member 39. A drawing process is performed on a portion of the container 3 in the vicinity of the opening portion so that the electrode group unit 2 is fixed in the container 3 as shown in Fig. 1B.

The container lid 55 forming a positive electrode terminal is disposed above the positive current collecting member 39. The container lid 55 includes a lid body 57 disposed on the positive current collecting member 39, and a lid cap 59 combined with the lid body 57. The lid body 57 is made of aluminum, and the lid cap 59 is made of steel plated with nickel as with the container 3. The lid cap 59 includes an annular flat portion 59a and a projected portion 59b projected from the center portion of the flat portion 59a. The container lid 55 is formed by curling (crimping) the edge portion of the lid body 57 around the outer peripheral portion of the flat portion 59a of the lid cap 59. A void portion 61 is formed between the projected portion 59b of the lid cap 59 and the lid body 57.

A first end of the positive terminal portion 44A, which is one of two positive electrode terminal portions which are ribbon-like aluminum foils stacked over each other, is joined to the upper surface of the positive current collecting member 39. The other positive terminal portion 44B is welded to the outer bottom surface of the lid body 57 forming the container lid 55. Second ends of the two positive terminal portions 44A, 44B are joined to each other. This allows the lid body 57 to be electrically connected to one of the electrodes (positive electrode 9) of the wound electrode group 5.

The annular projected portion 3a is formed in the container which has been subjected to a drawing process as discussed above. The container lid 55 is disposed on the annular projected portion 3a via an insulating member 65 for electrical insulation between the container lid 55 and the container 3. Then, an annular wall portion 3b is curled (crimpled) toward the container lid 55. As a result, the container lid 55 is fixed between the annular wall portion 3b which has been subjected to a curling process and the annular projected portion 3a via the insulating member 65. This allows the internal space of the capacitor 1 to be tightly sealed. The insulating ring member 63 and the insulating member 65 may be integrated to reduce the number of components.

An amount of a non-aqueous electrolyte (not shown) that is enough to infiltrate the entire electrode group unit 2 is injected into the container 3. The non-aqueous electrolyte may be a solution obtained by dissolving lithium phosphate hexafluoride (LiPF₆) as lithium salt in a solvent obtained by mixing ethylene carbonate (EC), dimethyl carbonate (DMC), and diethyl carbonate (DEC) at a volume ratio of 30:50:20, for example.

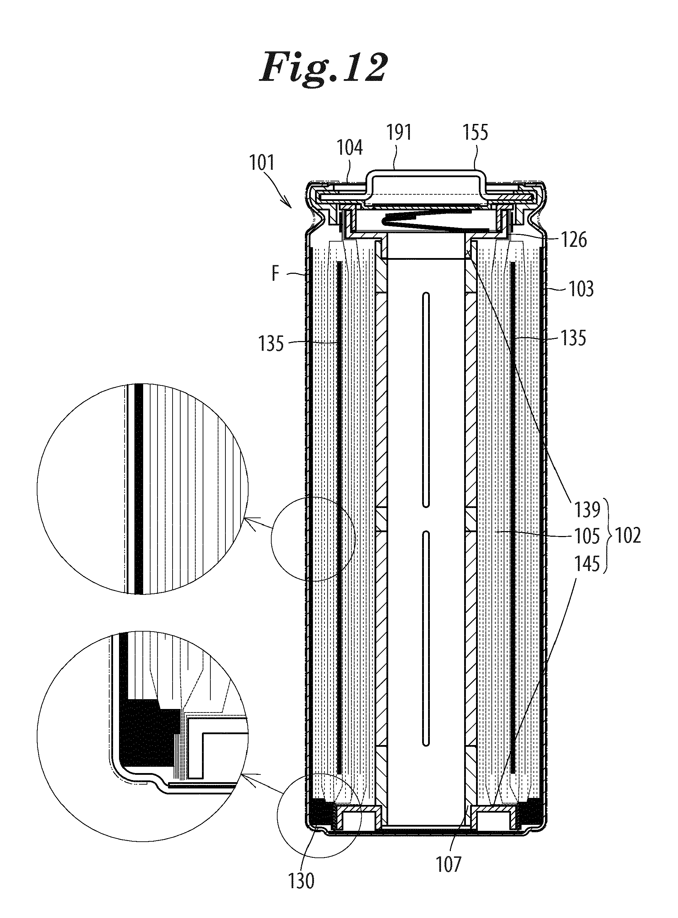

Fig. 12 is a cross-sectional view of a cylindrical lithium ion capacitor according to a second embodiment of the present invention taken along the longitudinal direction. In Fig. 12, some of the constituent members of the lithium ion capacitor are not shown. A cylindrical lithium ion capacitor 101 according to the embodiment includes a container 103, a container lid 155, and an electrode group unit 102. The container 103 is made of a nickel-plated steel material, and has the shape of a bottomed cylinder with one open end portion. An opening portion 104 of the container 103 is closed by the container lid 155. The container lid 155 according to the embodiment is crimped to the upper portion of the container 103 via a gasket 191 made of a resin having insulation and heat-resistance properties. Therefore, the internal space of the cylindrical lithium ion capacitor 101 is tightly sealed. An amount of a non-aqueous electrolyte (not shown) that is enough to infiltrate the entirety of a wound electrode group 105 of the electrode group unit 102 is injected into the container 103. In the embodiment, a solution obtained by dissolving lithium phosphate hexafluoride (LiPF₆) as an electrolyte in a mixed solvent of ethylene carbonate, dimethyl carbonate, and diethyl carbonate is used as the non-aqueous electrolyte. The electrode group unit 102 includes the wound electrode group 105, a positive current collecting member (first current collecting member) 139, and a negative current collecting member (second current collecting member) 145. In Fig. 11, in order to facilitate understanding, some members of the lithium ion capacitor are illustrated with exaggeration in terms of dimensions.

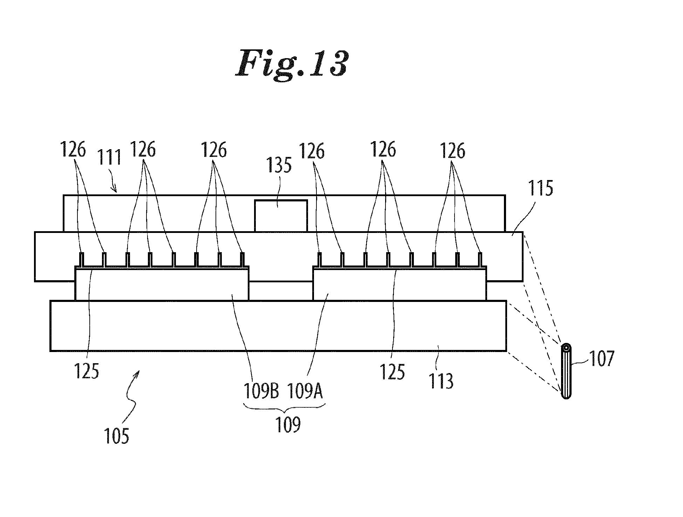

Fig. 13 schematically shows a state of the wound electrode group 105 before being wound. The wound electrode group 105 is formed by winding a belt-like positive electrode 109 and a belt-like negative electrode 111 via two separators 113 and 115 into a swirling shape about a hollow cylindrical axial core 107. The positive electrode 109 according to the embodiment includes two divided positive electrodes 109A and 109B formed by generally uniformly applying a positive mixture containing activated carbon to both surfaces of an aluminum foil serving as a positive current collector. The divided positive electrodes 109A and 109B are arranged with a predetermined gap in the winding direction, and have the same structure except for the length in the winding direction. An unapplied portion 125, to which no positive mixture is applied, is formed on one side of the aluminum foil in the longitudinal direction. The unapplied portion 125 has been cut into a comb-like shape, with the remaining uncut portions forming positive lead pieces, namely tabs 126. The negative electrode 111 is formed by generally uniformly applying a negative mixture containing carbon powder capable of occluding and releasing lithium ions as a negative active material to both surfaces of a rolled copper foil serving as a negative current collector. An unapplied portion, to which no negative mixture is applied, is formed on one side of the copper foil in the longitudinal direction. The unapplied portion has been cut into a comb-like shape, with the remaining uncut portions forming negative lead pieces, namely tabs 130. The tabs 130 of the negative electrode are formed on the side opposite to the side on which the tabs 126 of the positive electrode are formed. In Fig. 12, the plurality of tabs 126 of the positive electrode are located close to the container lid 155, and the plurality of tabs 130 of the negative electrode are located close to the bottom portion of the container 103. In Fig. 13, the tabs 130 of the negative electrode are not shown. In the negative electrode 111 according to the embodiment, a lithium metal plate (lithium metal) 135 is disposed at a position corresponding to the gap between the divided positive electrodes 109A and 109B. The lithium metal plate 135 is disposed at a position at which the lithium metal plate 135 does not face the divided positive electrodes 109A and 109B via the separators when the wound electrode group 105 is wound. The position at which the lithium metal plate 135 is disposed is determined such that a layer in which the lithium metal plate 135 is wound is located in a radially middle region of the wound electrode group 105 when the wound electrode group 105 is wound. The lithium metal plate 135 becomes sticky when a pressure is applied, and therefore may be affixed in advance to the negative electrode 111 by pressure bonding.

The separators 113 and 115 are formed using a cellulosic porous base material such as kraft paper. In the embodiment, the outer peripheral surface of the wound electrode group 105 is covered by an end portion of the separator 113 or 115. The end portion of the separator 113 or 115 is fixed by an adhesive tape (not shown) to prevent unwinding of the wound electrode group 105. The axial core 107 is formed from a polyphenylene resin. The specific configuration of the positive electrode 109, the negative electrode 111, and the separators 113 and 115 is not relevant to the gist of the present invention, and thus is not described here.

The positive current collecting member 139 made of aluminum and having a ring shape is disposed between the container lid 155 and an end portion of the wound electrode group 105 adjacent to the end portion of the wound electrode group 105. The plurality of tabs 126 of the positive electrode configured to collect electrical charges from the positive electrode 109 are connected to the positive current collecting member 139. The positive current collecting member 139 is fitted with the upper end portion of the axial core 107. The distal end portions of the tabs 126 of the divided positive electrodes 109A and 109B are joined to the outer peripheral surface of an annular portion of the positive current collecting member 139, which integrally extends from its periphery, by ultrasonic welding. The negative current collecting member 145 made of copper and having a ring shape is disposed between the bottom portion of the container 103 and an end portion of the wound electrode group 105 adjacent to the end portion of the wound electrode group 105. The plurality of tabs 130 of the negative electrode are connected to the negative current collecting member 145. The lower end portion of the axial core 107 is fitted with the inner peripheral surface of the negative current collecting member 145. The distal end portions of the tabs 130 of the negative electrode 111 are joined to the outer peripheral surface of an annular portion of the negative current collecting member 145 by ultrasonic welding. The specific configuration of the positive current collecting member 139 and the negative current collecting member 145 is not relevant to the gist of the present invention, and thus is not described here.

In the lithium ion capacitor according to the embodiment, as shown in Fig. 12, the outer peripheral surface of the wound electrode group 105 and the inner wall surface of the container 103 are joined to each other by a fluorine-based resin F. A fluorine-based resin available from Shin-Etsu Chemical Co., Ltd. under the product name SIFEL 660 is used in the embodiment. The fluorine-based resin does not react with the non-aqueous electrolyte. Therefore, the fluorine-based resin F, which does not react with the non-aqueous electrolyte, does not affect the properties of the lithium ion capacitor. The fluorine-based resin F has an adhesive force enough to join the container 103 and the wound electrode group 105 to each other. Thus, the fluorine-based resin F, which joins the outer peripheral surface of the wound electrode group 105 and the inner wall surface of the container 103 to each other, prevents the wound electrode group 105 from being significantly displaced with respect to the container 103. The fluorine-based resin F in the container 103 is cured in a relatively short time by being heated, and is not degraded in durability even if immersed in the non-aqueous electrolyte after being cured. If the container 103 and the wound electrode group 105 are joined to each other in this way, the wound electrode group 105 is not displaced with respect to the container 103, and thus the joint between the positive current collecting member 139 and the tabs 126 of the positive electrode and the joint between the negative current collecting member 145 and the tabs 130 of the negative electrode are not broken.

In the embodiment, in particular, the lithium metal plate 135 is disposed in the wound electrode group 105. The lithium metal plate 135 is ionized and occluded by a negative active material of the negative electrode 111 in a pre-use process. Therefore, in the lithium ion capacitor according to the embodiment, a void is formed in a portion of the wound electrode group 105 after being wound at which the lithium metal plate 135 has been disposed. When a void is formed in the wound electrode group 105, winding of the wound electrode group 105 is loosened. Therefore, turns of the laminated member forming the wound electrode group 105 become easily movable with respect to each other, and become easily displaceable with respect to the container 103. Among the turns of the laminated member forming the wound electrode group 105, inner turns close to the axial core 107 are not significantly displaced with respect to the container 103 because the axial core 107 is fixed to the container 103. Thus, the inner turns close to the axial core 107 are not significantly displaced with respect to the positive current collecting member 139 and the negative current collecting member 145 fixed to the container 103. Thus, the joint between the tabs 126 of the positive electrode for the inner turns close to the axial core 107 and the positive current collecting member 139 and the joint between the tabs 130 of the negative electrode for the inner turns close to the axial core 107 and the negative current collecting member 145 are not easily broken. However, outer turns far from the axial core 107 are significantly displaced with respect to the container 103. Therefore, the joint between the tabs 126 of the positive electrode for the outer turns and the positive current collecting member 139 and the joint between the tabs 130 of the negative electrode for the outer turns and the negative current collecting member 145 are more easily broken than such joints for the inner turns close to the axial core 107. In the lithium ion capacitor according to the embodiment, the fluorine-based resin F is accumulated between a portion of the electrode group unit 102 located close to the bottom portion of the container 103, that is, the negative current collecting member 145 and a part of the wound electrode group 105, and the bottom portion of the container 103 and a part of the inner wall surface of the container 103 leading to the bottom portion to be cured. Thus, the outer turns of the laminated member which are easily displaceable with respect to the container 103 are further fixed to the container 103 by the fluorine-based resin F. Thus, the joint between the positive current collecting member 139 fixed to the container 103 and the tabs 126 of the positive electrode for the outer turns and the joint between the negative current collecting member 145 fixed to the container 103 and the tabs 130 of the negative electrode for the outer turns are not broken.

In the embodiment, the outer peripheral surface of the wound electrode group 105 and the inner wall surface of the container 103 are entirely joined to each other by the fluorine-based resin F. However, the outer peripheral surface of the wound electrode group 105 and the inner wall surface of the container 103 may be partially joined to each other by the fluorine-based resin F as long as displacement of the wound electrode group 105 in the container 103 can be sufficiently restricted. Alternatively, the fluorine-based resin F may not be provided between the negative current collecting member 145 and a part of the wound electrode group 105, and the bottom portion of the container 103 and a part of the inner wall surface of the container 103 leading to the bottom portion as long as displacement of the wound electrode group 105 in the container 103 can be sufficiently restricted by only the joint between the outer peripheral surface of the wound electrode group 105 and the inner wall surface of the container 103.

In order to manufacture the lithium ion capacitor according to the embodiment, the electrode group unit 102, the container 103, and the container lid 155 are prepared in advance. The electrode group unit 102, the container 103, and the container lid 155 can be manufactured by the manufacturing method known in the art described in JP 2010-141217 A etc. Such a manufacturing method is not relevant to the gist of the present invention, and thus is not described here. First, the fluorine-based resin F that does not react with the non-aqueous electrolyte is applied to a part of the inner wall surface of the container 103 around the opening portion 104. After that, the electrode group unit 102 is inserted into the container 103 from the opening portion 104. When the electrode group unit 102 is inserted into the container 103 from the opening portion 104, the fluorine-based resin F applied to the inner wall surface of the container 103 around the opening portion 104 contacts the outer peripheral surface of the wound electrode group 105 of the electrode group unit 102 so that the fluorine-based resin F is spread between the inner wall surface of the container 103 and the outer peripheral surface of the wound electrode group 105. If an increased amount of the fluorine-based resin F is applied to the inner wall surface of the container 103 around the opening portion 104, the fluorine-based resin F is scraped down to a portion of the electrode group unit 102 located close to the bottom portion of the container 103, that is, the negative current collecting member 145 and an end portion of the wound electrode group 105 close to the bottom portion. Next, the fluorine-based resin F is cured. Then, the negative current collecting member 145 of the electrode group unit 102 and the container 103 are electrically connected to each other, and the positive current collecting member 139 and the container lid 155 are electrically connected to each other. Lastly, the opening portion 104 is sealed with the container lid 155, and the non-aqueous electrolyte is injected from a liquid injection port.

Although the fluorine-based resin is used in the embodiment described above, a polypropylene-based resin, a polyethylene-based resin, polyphenylene sulfide, etc. may also be used as the resin material that does not react with the non-aqueous electrolyte.

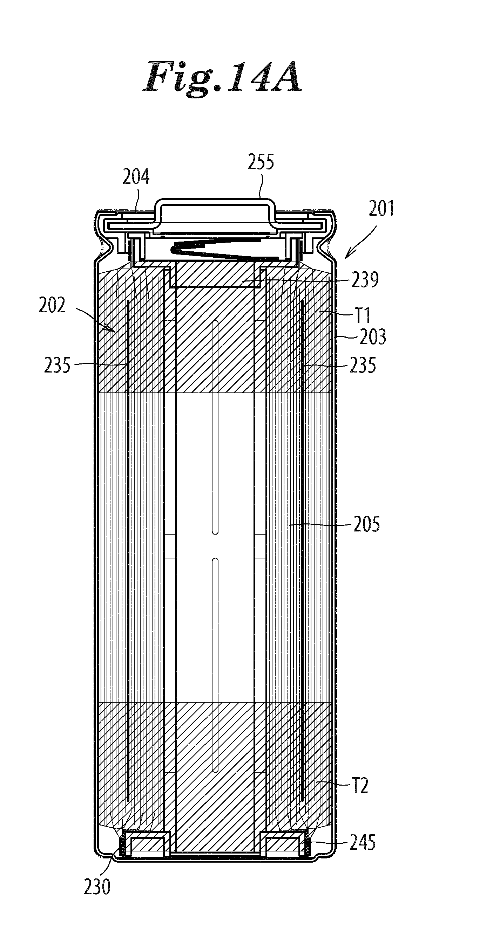

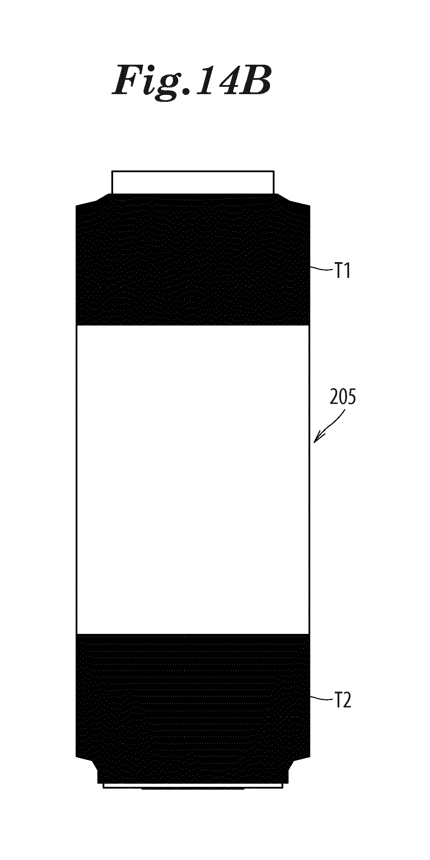

Fig. 14A is a partial cross-sectional view of a cylindrical lithium ion capacitor 201 according to a third embodiment of the present invention taken along the longitudinal direction. Fig. 14B shows the appearance of a main portion of an electrode group unit 202. In Fig. 14, component parts that are similar to those shown in Fig. 12 are denoted by reference numerals obtained by adding 100 to the reference numerals affixed to their counterparts in Fig. 12 to omit detailed description.

In the cylindrical lithium ion capacitor 201 according to the embodiment, as shown in Fig. 14A, the outer peripheral surface of a wound electrode group 205 and the inner wall surface of a container 203, and an end portion of the wound electrode group 205 and the bottom portion of the container 203, are not joined to each other by a fluorine-based resin F. In the cylindrical lithium ion capacitor 201 according to the embodiment, as shown in Fig. 14B, both ends of the electrode group unit 202 are surrounded in a tightened state by shrink tubes T1 and T2 made of a polyolefin. In Fig. 14A, regions with expandable tubes are indicated as hatched. Specifically, one end of the electrode group unit 202 on the positive electrode side is surrounded in a tightened state by the positive-side shrink tube T1 made of a polyolefin. The positive-side shrink tube T1 is configured to extend across a part of a positive current collecting member 239 and a part of the wound electrode group 205 on the positive electrode side. Meanwhile, one end of the electrode group unit 202 on the negative electrode side is surrounded in a tightened state by the negative-side shrink tube T2 made of a polyolefin. The negative-side shrink tube T2 is configured to extend across a part of a negative current collecting member 245 and a part of the wound electrode group 205 on the negative electrode side. Thus, turns of the laminated member forming the wound electrode group 205 are pressed at an end portion on the positive electrode side and at an end portion on the negative electrode side by the shrink tubes T1 and T2, respectively. Thus, tabs 226 of the positive electrode and tabs 230 of the negative electrode are not removed from the positive current collecting member 239 and the negative current collecting member 245, respectively. Thus, the joint between the tabs 226 of the positive electrode and the positive current collecting member 239 and the joint between the tabs 230 of the negative electrode and the negative current collecting member 245 are not easily broken. In the lithium ion capacitor in which a layer of a lithium metal plate to be occluded by a negative electrode in a pre-use process is provided in the wound electrode group 205 after being wound as in the embodiment, in particular, the lithium metal plate is ionized and occluded by a negative active material of the negative electrode 211 in the pre-use process. Therefore, a void is formed in the wound electrode group 205 after being wound. However, since a portion extending across a part of the positive current collecting member 239 and a part of the wound electrode group 205 is fastened by the positive-side shrink tube T1 made of a polyolefin, and a portion extending across a part of the negative current collecting member 245 and a part of the wound electrode group 205 is fastened by the negative-side shrink tube T2 made of a polyolefin, the turns of the laminated member forming the wound electrode group 205 are pressed around the positive current collecting member 239 and the negative current collecting member 245, and the void formed in the wound electrode group 205 is eliminated. This makes it possible to prevent the turns of the laminated member forming the wound electrode group 205 from being displaced with respect to the container 203, and thus the joint between the positive current collecting member 239 and the tabs 226 of the positive electrode and the joint between the negative current collecting member 245 and the tabs 230 of the negative electrode are not easily broken.

In order to verify the vibration resistance effect and the impact resistance effect of the present invention, the inventors conducted a vibration test for the lithium ion capacitors according to the embodiments of Figs. 12 and 14 and a lithium ion capacitor with no vibration resistance measures taken. In order to verify the effect of lithium being located in the middle of the wound member, in addition, the experiment was also conducted for an outer-lithium ion capacitor in which lithium was disposed on the outer side of the wound member.

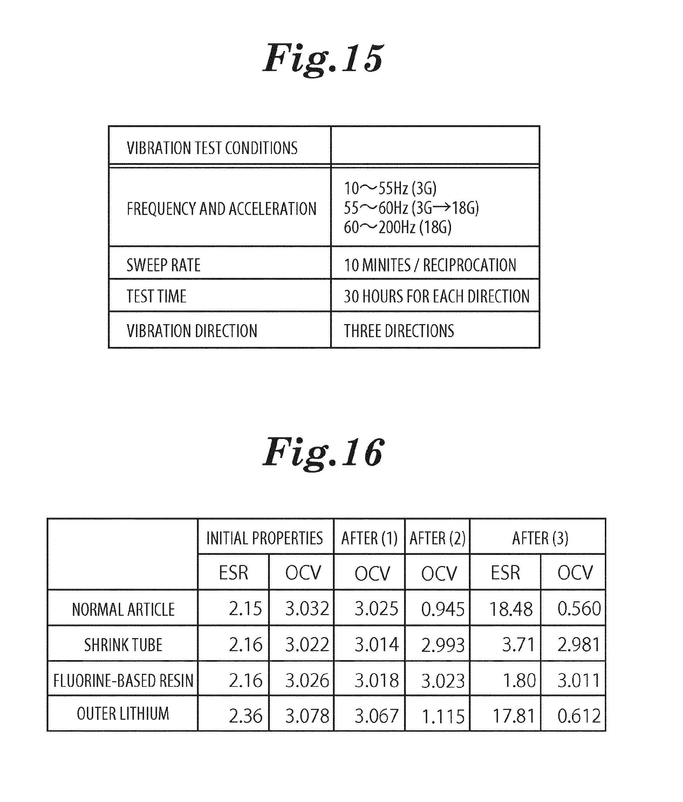

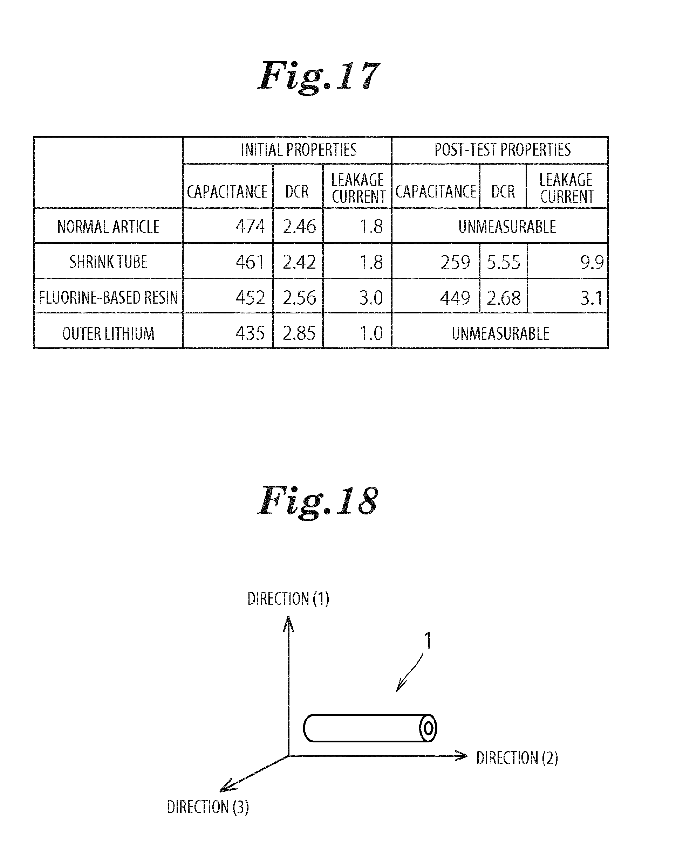

Fig. 15 shows the test conditions for the vibration test. Figs. 16 and 17 show the test results of the vibration experiment. The "THREE DIRECTIONS" in the "VIBRATION DIRECTION" field in Fig. 15 indicates the directions (1), (2), and (3) of Fig. 18. In the experiment, first, each lithium ion capacitor was vibrated in the direction (1) of Fig. 18. As indicated in the "FREQUENCY AND ACCELERATION" field in Fig. 15, first, each lithium ion capacitor was vibrated at frequencies of 10 to 55 Hz at an acceleration of 3 G (gravitational acceleration). Then, each lithium ion capacitor was vibrated at frequencies of 55 to 60 Hz while increasing the acceleration from 3 G to 18 G. Lastly, each lithium ion capacitor was vibrated at frequencies of 60 to 200 Hz at an acceleration of 18 G. Each lithium ion capacitor was also vibrated at the same accelerations when the frequency was reduced from 200 Hz to 10 Hz. One reciprocation of vibration in the direction (1) was thus finished. Thus, vibration in the direction (1) was repeated for a total of 30 hours as indicated in the "VIBRATION TIME" field. When vibration in the direction (1) was finished, each lithium ion capacitor was vibrated in the direction (2), and then vibrated in the direction (3). Each lithium ion capacitor was vibrated in the direction (2) and the direction (3) in the same manner as it was vibrated in the direction (1). Each lithium ion capacitor was also vibrated in the direction (2) and the direction (3) for a total of 30 hours each as indicated in the "VIBRATION TIME" field. Each lithium ion capacitor was vibrated at a sweep rate of ten minutes per one reciprocation. Here, the term "sweep rate" refers to a rate of reciprocation determined by a sinusoidal wave at frequencies of 10 Hz to 200 Hz.

In the experiment, the results of which are shown in Figs. 16 and 17, values of the equivalent series resistance (ESR: unit [mΩ]), the open circuit voltage (OCV: no-load voltage: unit [V]), the capacitance of the capacitor (unit [F]), the direct-current resistance (DCR: unit [mΩ]), and the leakage current (unit [mA]) were measured before and after the experiment. OCV was also measured after vibration in each direction. The "AFTER (1)", "AFTER (2)", and "AFTER (3)" fields in Fig. 16 indicate that measurement was performed after vibration in each direction shown in Fig. 18. In Figs. 16 and 17, "FLUORINE-BASED RESIN" indicates a lithium ion capacitor in which a container and a wound electrode group are fixed to each other by a fluorine-based resin, "SHRINK TUBE" indicates a lithium ion capacitor in which end portions of an electrode group unit are surrounded in tightened state by shrink tubes, "NORMAL ARTICLE" indicates a lithium ion capacitor with no vibration resistance measures or impact resistance measures taken, and "OUTER LITHIUM" indicates a lithium ion capacitor in which lithium is disposed on the outer side of the wound electrode group.

As seen from the results shown in Fig. 16, if the container and the wound electrode group were fixed to each other by the fluorine-based resin, the measurement values of ESR and OCV before and after the test were hardly varied. If the end portions of the electrode group unit were surrounded in a tightened state by the shrink tubes, the measurement values of ESR and OCV before and after the test were varied to a smaller degree than those for "NORMAL ARTICLE" and "OUTER LITHIUM". For "NORMAL ARTICLE" and "OUTER LITHIUM", the measurement values of ESR and OCV before and after the test were significantly varied.

As seen from the results shown in Fig. 17, in addition, if the container and the wound electrode group were fixed to each other by the fluorine-based resin, the measurement values of the capacitance, DCR, and the leakage current before and after the test were hardly varied. If the end portions of the electrode group unit were surrounded in a tightened state by the shrink tubes, the capacitance, DCR, and the leakage current were slightly varied, but barely measurable. For "NORMAL ARTICLE" and "OUTER LITHIUM", the capacitance, DCR, and the leakage current were not measurable. This is considered to be because the joints between the tabs and the current collecting members were mostly broken.

According to the results shown in Figs. 16 and 17, if the container and the wound electrode group were fixed to each other by the fluorine-based resin, it is considered that the properties of the lithium ion capacitor were hardly impaired, and that the vibration resistance and the impact resistance were enhanced. If the end portions of the electrode group unit were surrounded in a tightened state by the shrink tubes, it is considered that the vibration resistance and the impact resistance were enhanced to such a degree that the thus configured lithium ion capacitor was able to function as a lithium ion capacitor although its measurement values were slightly varied.

The lithium ion capacitors used in the test were unsealed after the vibration test to examine the state of the joint between the positive current collecting member and the tabs of the positive electrode and the state of the joint between the negative current collecting member and the tabs of the negative electrode. Then, for the lithium ion capacitor which used the fluorine-based resin, most of the joints were not broken. For the lithium ion capacitor which used the shrink tubes, almost 40% of the connections remained unbroken. For the lithium ion capacitor with no vibration resistance measures taken and the outer-lithium ion capacitor, most of the connections were broken.

In the lithium ion capacitor according to the embodiment, a solution obtained by dissolving lithium phosphate hexafluoride (LiPF₆) as an electrolyte in a mixed solvent of ethylene carbonate, dimethyl carbonate, and diethyl carbonate is used as the non-aqueous electrolyte. However, it is a matter of course that any other non-aqueous electrolyte obtained by dissolving a common lithium salt as an electrolyte in an organic solvent may also be used. Examples of the electrolyte include LiClO₄, LiAsF₆, LiBF₄, LiB(C₆H₅)₄, CH₃SO₃Li, CF₃SO₃Li, etc., and a combination of these. Examples of the organic solvent include propylene carbonate, diethyl carbonate, 1,2-dimethoxyethane, 1,2-diethoxyethane, γ-butyrolactone, tetrahydrofuran, 1,3-dioxolane, 4-methyl-1,3-dioxolane, diethyl ether, sulfolane, methylsulfolane, acetonitrile, propionitrile, etc., and a combination of two or more of these. The mixing/compounding ratio is also not specifically limited.

In the embodiment described above, the present invention is applied to a cylindrical lithium ion capacitor. However, it is a matter of course that the present invention may also be applied to rectangular lithium ion capacitors, and to other non-aqueous electrolyte storage devices such as lithium ion batteries.

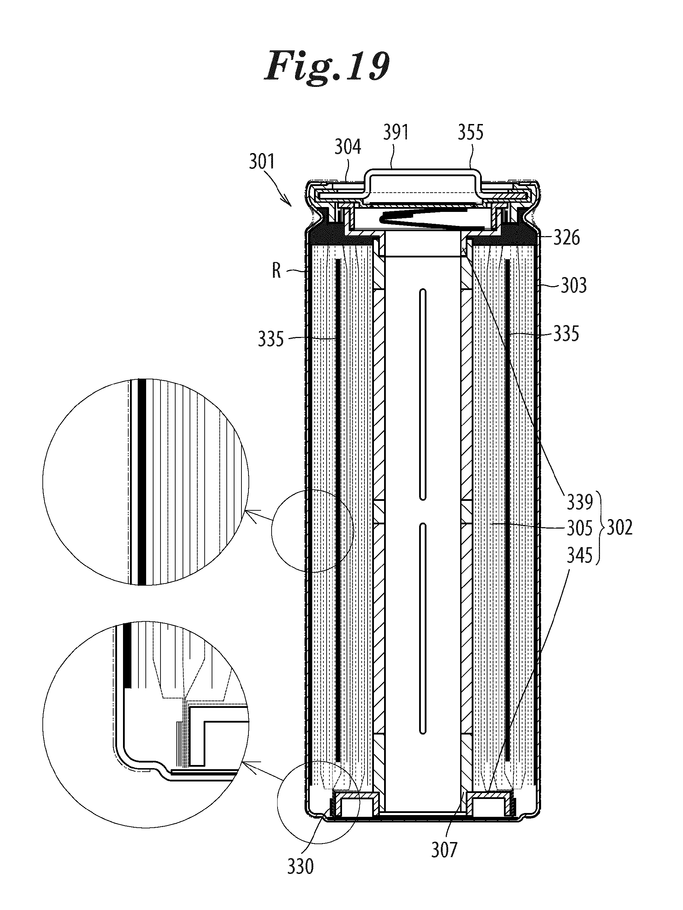

Fig. 19 is a cross-sectional view of a cylindrical lithium ion capacitor according to a fourth embodiment of the present invention taken along the longitudinal direction. In Fig. 19, some of the constituent members of the lithium ion capacitor are not shown. A cylindrical lithium ion capacitor 301 according to the embodiment includes a container 303, a container lid 355, and an electrode group unit 302. The container 303 is made of a nickel-plated steel material, and has the shape of a bottomed cylinder with one open end portion. An opening portion 304 of the container 303 is closed by the container lid 355. The container lid 355 according to the embodiment is crimped to the upper portion of the container 303 via a gasket 391 made of a resin having insulation and heat-resistance properties. Therefore, the internal space of the cylindrical lithium ion capacitor 301 is tightly sealed. An amount of a non-aqueous electrolyte (not shown) that is enough to infiltrate the entirety of a wound electrode group 305 of the electrode group unit 302 is injected into the container 303. In the embodiment, a solution obtained by dissolving lithium phosphate hexafluoride (LiPF₆) as an electrolyte in a mixed solvent of ethylene carbonate, dimethyl carbonate, and diethyl carbonate is used as the non-aqueous electrolyte. The electrode group unit 302 includes the wound electrode group 305, a positive current collecting member (first current collecting member) 339, and a negative current collecting member (second current collecting member) 345. In Fig. 19, in order to facilitate understanding, some members of the lithium ion capacitor are illustrated with exaggeration in terms of dimensions.

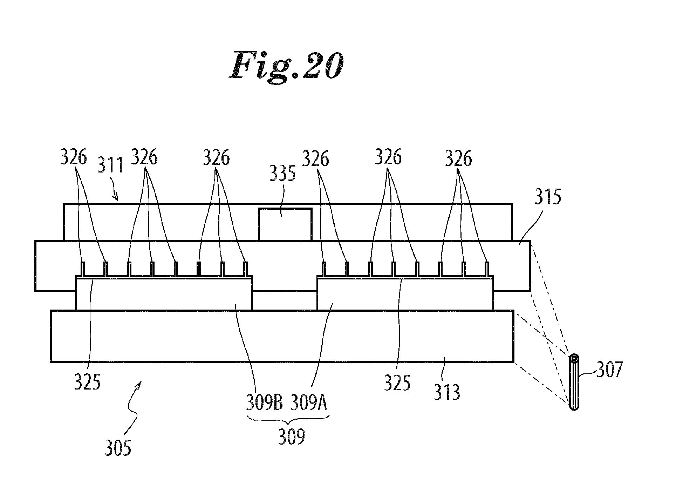

Fig. 20 schematically shows a state of the wound electrode group 305 before being wound. The wound electrode group 305 is formed by winding a belt-like positive electrode 309 and a belt-like negative electrode 311 via two separators 313 and 315 into a swirling shape about a hollow cylindrical axial core 307. The positive electrode 309 according to the embodiment includes two divided positive electrodes 309A and 309B formed by generally uniformly applying a positive mixture containing activated carbon to both surfaces of an aluminum foil serving as a positive current collector. The divided positive electrodes 309A and 309B are arranged with a predetermined gap in the winding direction, and have the same structure except for the length in the winding direction. An unapplied portion 325, to which no positive mixture is applied, is formed on one side of the aluminum foil in the longitudinal direction. The unapplied portion 325 has been cut into a comb-like shape, with the remaining uncut portions forming positive lead pieces, namely tabs 326. The negative electrode 311 is formed by generally uniformly applying a negative mixture containing carbon powder capable of occluding and releasing lithium ions as a negative active material to both surfaces of a rolled copper foil serving as a negative current collector. An unapplied portion, to which no negative mixture is applied, is formed on one side of the copper foil in the longitudinal direction. The unapplied portion has been cut into a comb-like shape, with the remaining uncut portions forming negative lead pieces, namely tabs 330. The tabs 330 of the negative electrode are formed on the side opposite to the side on which the tabs 326 of the positive electrode are formed. In Fig. 19, the plurality of tabs 326 of the positive electrode are located close to the container lid 355, and the plurality of tabs 330 of the negative electrode are located close to the bottom portion of the container 303. In Fig. 20, the tabs 330 of the negative electrode are not shown. In the negative electrode 311 according to the embodiment, a lithium metal plate (lithium metal) 335 is disposed at a position corresponding to the gap between the divided positive electrodes 309A and 309B. The lithium metal plate 335 is disposed at a position at which the lithium metal plate 335 does not face the divided positive electrodes 309A and 309B via the separators when the wound electrode group 305 is wound. The position at which the lithium metal plate 335 is disposed is determined such that a layer in which the lithium metal plate 335 is wound is located in a radially middle region of the wound electrode group 305 when the wound electrode group 305 is wound. The lithium metal plate 335 becomes sticky when a pressure is applied, and therefore may be affixed in advance to the negative electrode 311 by pressure bonding.

The separators 313 and 315 are formed using a cellulosic porous base material such as kraft paper. In the embodiment, the outer peripheral surface of the wound electrode group 305 is covered by an end portion of the separator 313 or 315. The end portion of the separator 313 or 315 is fixed by an adhesive tape (not shown) to prevent unwinding of the wound electrode group 305. The axial core 307 is formed from a polyphenylene resin. The specific configuration of the positive electrode 309, the negative electrode 311, and the separators 313 and 315 is not relevant to the gist of the present invention, and thus is not described here.

The positive current collecting member 339 made of aluminum and having a ring shape is disposed between the container lid 355 and an end portion of the wound electrode group 305 adjacent to the end portion of the wound electrode group 305. The plurality of tabs 326 of the positive electrode configured to collect electrical charges from the positive electrode 309 are connected to the positive current collecting member 339. The positive current collecting member 339 is fitted with the upper end portion of the axial core 307. The distal end portions of the tabs 326 of the divided positive electrodes 309A and 309B are joined to the outer peripheral surface of an annular portion of the positive current collecting member 339, which integrally extends from its periphery, by ultrasonic welding. The negative current collecting member 345 made of copper and having a ring shape is disposed between the bottom portion of the container 303 and an end portion of the wound electrode group 305 adjacent to the end portion of the wound electrode group 305. The plurality of tabs 330 of the negative electrode are connected to the negative current collecting member 345. The lower end portion of the axial core 307 is fitted with the inner peripheral surface of the negative current collecting member 345. The distal end portions of the tabs 330 of the negative electrode 311 are joined to the outer peripheral surface of an annular portion of the negative current collecting member 345 by ultrasonic welding. The specific configuration of the positive current collecting member 339 and the negative current collecting member 345 is not relevant to the gist of the present invention, and thus is not described here.

In the lithium ion capacitor according to the embodiment, as shown in Fig. 19, the outer peripheral surface of the wound electrode group 305 and the inner wall surface of the container 303 are joined to each other by a thermoplastic resin R. The thermoplastic resin used in the embodiment is a resin obtained by mixing 80 wt% of polypropylene and 20 wt% of polyethylene. The thermoplastic resin R does not react with the non-aqueous electrolyte. Therefore, the thermoplastic resin R, which does not react with the non-aqueous electrolyte, does not affect the properties of the lithium ion capacitor. The thermoplastic resin R has an adhesive force enough to join the container 303 and the wound electrode group 305 to each other. Thus, the thermoplastic resin R, which joins the outer peripheral surface of the wound electrode group 305 and the inner wall surface of the container 303 to each other, prevents the wound electrode group 305 from being significantly displaced with respect to the container 303. The thermoplastic resin R in the container 303 is cured in a relatively short time by being heated, and is not degraded in durability even if immersed in the non-aqueous electrolyte after being cured. If the container 303 and the wound electrode group 305 are joined to each other in this way, the wound electrode group 305 is not displaced with respect to the container 303, and thus the joint between the positive current collecting member 339 and the tabs 326 of the positive electrode and the joint between the negative current collecting member 345 and the tabs 330 of the negative electrode are not broken.

In the embodiment, in particular, the lithium metal plate 335 is disposed in the wound electrode group 305. The lithium metal plate 335 is ionized and occluded by a negative active material of the negative electrode 311 in a pre-use process. Therefore, in the lithium ion capacitor according to the embodiment, a void is formed in a portion of the wound electrode group 305 after being wound at which the lithium metal plate 335 has been disposed. When a void is formed in the wound electrode group 305, winding of the wound electrode group 305 is loosened. Therefore, turns of the laminated member forming the wound electrode group 305 become easily movable with respect to each other, and become easily displaceable with respect to the container 303. Among the turns of the laminated member forming the wound electrode group 305, inner turns close to the axial core 307 are not significantly displaced with respect to the container 303 because the axial core 307 is fixed to the container 303. Thus, the inner turns close to the axial core 307 are not significantly displaced with respect to the positive current collecting member 339 and the negative current collecting member 345 fixed to the container 303. Thus, the joint between the tabs 326 of the positive electrode for the inner turns close to the axial core 307 and the positive current collecting member 339 and the joint between the tabs 330 of the negative electrode for the inner turns close to the axial core 307 and the negative current collecting member 345 are not easily broken. However, outer turns far from the axial core 307 are significantly displaced with respect to the container 303. Therefore, the joint between the tabs 326 of the positive electrode for the outer turns and the positive current collecting member 339 and the joint between the tabs 330 of the negative electrode for the outer turns and the negative current collecting member 345 are more easily broken than such joints for the inner turns close to the axial core 307. In the lithium ion capacitor according to the embodiment, the thermoplastic resin R is accumulated between a portion of the electrode group unit 303 located close to the container lid 355 of the container 303, that is, the positive current collecting member 339 and a part of the wound electrode group 305, and a part of the inner wall surface of the container 303 to be cured. Thus, the outer turns of the laminated member which are easily displaceable with respect to the container 303 are further fixed to the container 303 by the thermoplastic resin R. Thus, the joint between the positive current collecting member 339 fixed to the container 303 and the tabs 326 of the positive electrode for the outer turns and the joint between the negative current collecting member 345 fixed to the container 303 and the tabs 330 of the negative electrode for the outer turns are not broken. The thermoplastic resin R is provided to join the plurality of tabs 326 of the positive electrode to each other, or to join the plurality of tabs 326 of the positive electrode and the positive current collecting member 339 to each other. Therefore, the plurality of tabs 326 of the positive electrode are fixed to each other, or the plurality of tabs 326 of the positive electrode and the positive current collecting member 339 are fixed to each other, as being surrounded by a thermoplastic resin material. Thus, the tabs 326 of the positive electrode can be prevented from being broken.

In order to manufacture the lithium ion capacitor according to the embodiment, for example, the electrode group unit 302, the container 303, and the container lid 355 are prepared in advance. The electrode group unit 302, the container 303, and the container lid 355 can be manufactured by the manufacturing method known in the art described in JP 2010-141217 A etc. Such a manufacturing method is not relevant to the gist of the present invention, and thus is not described here. First, the electrode group unit 302 is inserted into the container 303 from the opening portion 304. The negative current collecting member 345 of the electrode group unit 302 and the container 303 are electrically connected to each other, and the positive current collecting member 339 and the container lid 355 are electrically connected to each other. Then, an appropriate amount of the thermoplastic resin R prepared in advance is placed on the inner wall surface of the container 303 and a part of the electrode group unit 302 and the tabs 326 of the positive electrode from the opening portion 304 of the container 303. After that, the thermoplastic resin R is heated to be softened. The thermoplastic resin R which has been softened is partially entangled between the plurality of tabs 326 of the positive electrode, and between the plurality of tabs 326 of the positive electrode and the positive current collecting member 339. After that, heating of the thermoplastic resin R is stopped to return the thermoplastic resin R to normal temperature to be solidified. Lastly, the opening portion 304 is sealed with the container lid 355, and the non-aqueous electrolyte is injected from a liquid injection port.

In the embodiment described above, a resin containing 80 wt% of polypropylene and 20 wt% of polyethylene is used as the resin material that does not react with the non-aqueous electrolyte. However, a resin containing polypropylene and polyethylene at different content percentages, polypropylene alone, polyethylene alone, polyphenylene sulfide, etc. may also be used.

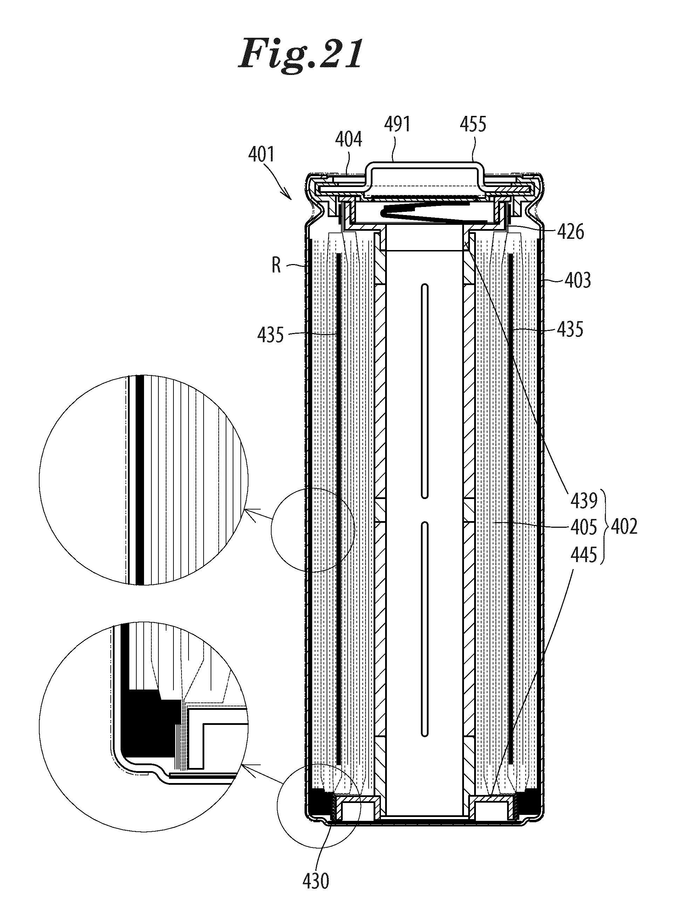

In the embodiment described above, the thermoplastic resin F is used to join the positive current collecting member 339 and the tabs 326 of the positive electrode and a part of the wound electrode group 305 and a part of the inner wall surface of the container 303. However, as in a fifth embodiment of the present invention shown in Fig. 21, the thermoplastic resin R may be used to join a part of the inner wall surface of a container 403 close to the bottom portion and tabs 430 of the negative electrode and a negative current collecting member 445. Fig. 21 is a cross-sectional view of a cylindrical lithium ion capacitor according to a fifth embodiment of the present invention taken along the longitudinal direction. In the embodiment, the thermoplastic resin R is accumulated between the negative current collecting member 445 and the tabs 430 of the negative electrode and a part of a wound electrode group 405 and a part of the inner wall surface of the container 403 to be cured. Thus, the outer turns of the laminated member which are easily displaceable with respect to the container 403 are further fixed to the container 403 by the thermoplastic resin R. Thus, the joint between a positive current collecting member 439 fixed to the container 403 and tabs 426 of the positive electrode for the outer turns and the oint between the negative current collecting member 445 fixed to the container 403 and the tabs 430 of the negative electrode for the outer turns are not broken. In the embodiment, the thermoplastic resin R is provided to join the plurality of tabs 430 of the negative electrode to each other, or to join the plurality of tabs 430 of the negative electrode and the negative current collecting member 445 to each other. Therefore, the plurality of tabs 430 of the negative electrode are fixed to each other, or the plurality of tabs 430 of the negative electrode and the negative current collecting member 445 are fixed to each other, as being surrounded by a thermoplastic resin material. Thus, the tabs 430 of the negative electrode can be further prevented from being broken.

In order to manufacture the lithium ion capacitor according to the embodiment, for example, an electrode group unit 402, the container 403, and a container lid 455 are prepared in advance. The electrode group unit 402, the container 403, and the container lid 455 can be manufactured by the manufacturing method known in the art described in JP 2010-141217 A etc. Such a manufacturing method is not relevant to the gist of the present invention, and thus is not described here. First, an appropriate amount of the thermoplastic resin R prepared in advance is placed on the bottom portion side of the container 403. After that, the electrode group unit 402 is inserted into the container 403. After that, the thermoplastic resin R is heated to be softened. The thermoplastic resin R which has been softened is partially entangled between the plurality of tabs 430 of the negative electrode, and between the plurality of tabs 430 of the negative electrode and the negative current collecting member 445. After that, heating of the thermoplastic resin R is stopped to return the thermoplastic resin R to normal temperature to be solidified. Then, the negative current collecting member 445 close to the bottom portion of the container 403 and the container 403 are electrically connected to each other. The process of electrically connecting the negative current collecting member 445 close to the bottom portion of the container 403 and the container 403 to each other may be performed before the process of softening and curing the thermoplastic resin R. After that, the positive current collecting member 439 and the container lid 455 are electrically connected to each other. Lastly, an opening portion 404 is sealed with the container lid 455, and the non-aqueous electrolyte is injected from a liquid injection port.

In the second to fifth embodiments, the present invention is applied to electrical storage devices including a wound electrode group having a positive electrode and a negative electrode with tabs. However, it is a matter of course that the inventions according to the second to fifth embodiments may also be applied to electrical storage devices including a wound electrode group having a positive electrode and a negative electrode with no tabs.

In order to verify the vibration resistance effect and the impact resistance effect of the present invention, the inventors conducted a vibration test for the lithium ion capacitors according to the embodiments of Figs. 19 and 21 and a lithium ion capacitor with no vibration resistance measures taken. In addition, the vibration test was also conducted for a lithium ion capacitor in which the current collectors are formed with no tabs and the current collecting members and the unapplied portions of the wound electrode group are directly welded to each other by semiconductor laser welding or the like to connect the current collector of the positive electrode and the current collector of the negative electrode and the current collecting member of the positive electrode and the current collecting member of the negative electrode, respectively, and for lithium ion capacitors obtained by taking vibration resistance measures which use the thermoplastic resin as shown in Figs. 19 and 21 on the lithium ion capacitor formed with no tabs.

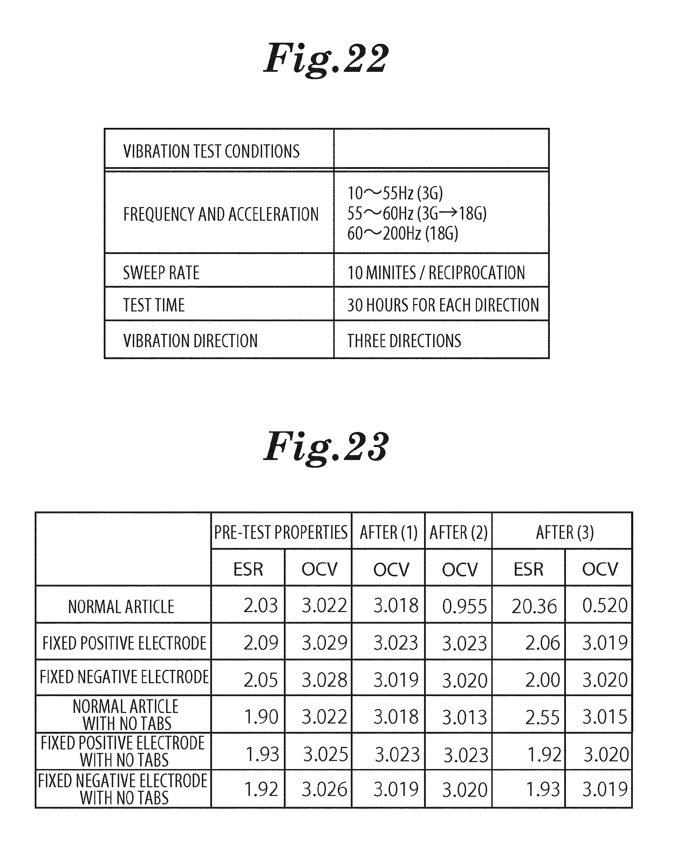

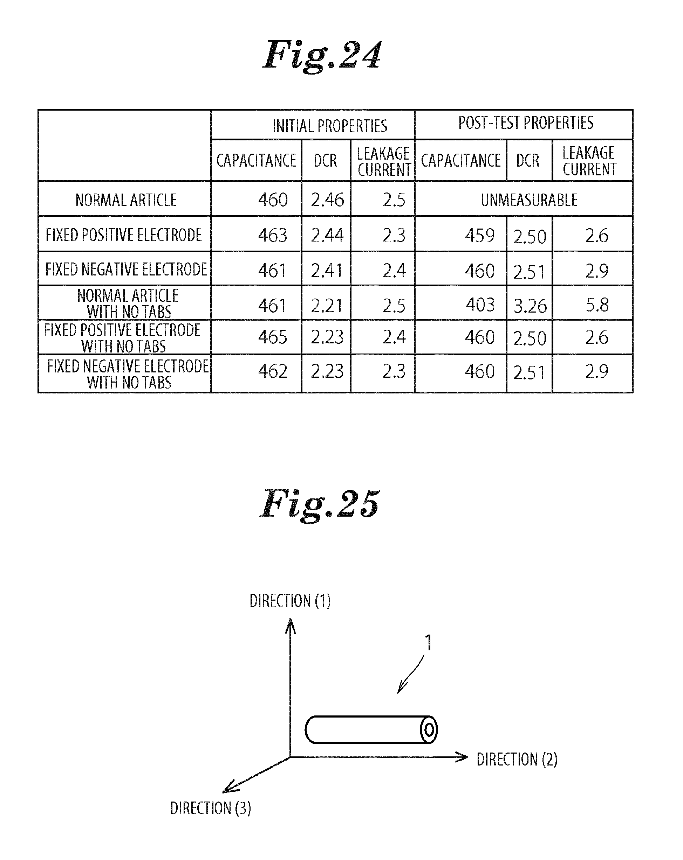

Fig. 22 shows the test conditions for the vibration test. Figs. 23 and 24 show the test results of the vibration experiment. The "THREE DIRECTIONS" in the "VIBRATION DIRECTION" field in Fig. 22 indicates the directions (1), (2), and (3) of Fig. 25. In the experiment, first, each lithium ion capacitor was vibrated in the direction (1) of Fig. 25. As indicated in the "FREQUENCY AND ACCELERATION" field in Fig. 22, first, each lithium ion capacitor was vibrated at frequencies of 10 to 55 Hz at an acceleration of 3 G (gravitational acceleration). Then, each lithium ion capacitor was vibrated at frequencies of 55 to 60 Hz while increasing the acceleration from 3 G to 18 G. Lastly, each lithium ion capacitor was vibrated at frequencies of 60 to 200 Hz at an acceleration of 18 G. Each lithium ion capacitor was also vibrated at the same accelerations when the frequency was reduced from 200 Hz to 10 Hz. One reciprocation of vibration in the direction (1) was thus finished. Thus, vibration in the direction (1) was repeated for a total of 30 hours as indicated in the "VIBRATION TIME" field. When vibration in the direction (1) was finished, each lithium ion capacitor was vibrated in the direction (2), and then vibrated in the direction (3). Each lithium ion capacitor was vibrated in the direction (2) and the direction (3) in the same manner as it was vibrated in the direction (1) . Each lithium ion capacitor was also vibrated in the direction (2) and the direction (3) for a total of 30 hours each as indicated in the "VIBRATION TIME" field. Each lithium ion capacitor was vibrated at a sweep rate of ten minutes per one reciprocation. Here, the term "sweep rate" refers to a rate of reciprocation determined by a sinusoidal wave at frequencies of 10 Hz to 200 Hz.

In the experiment, the results of which are shown in Figs. 23 and 24, values of the equivalent series resistance (ESR: unit [mΩ]), the open circuit voltage (OCV: no-load voltage: unit [V]), the capacitance of the capacitor (unit [F]), the direct-current resistance (DCR: unit [mΩ]), and the leakage current (unit [mA]) were measured before and after the experiment. OCV was also measured after vibration in each direction. The "AFTER (1)", "AFTER (2)", and "AFTER (3)" fields in Fig. 23 indicate that measurement was performed after vibration in each direction shown in Fig. 25. In Figs. 23 and 24, "NORMAL ARTICLE" indicates a lithium ion capacitor with no vibration resistance measures or impact resistance measures taken, "FIXED POSITIVE ELECTRODE" indicates a lithium ion capacitor in which the container and the wound electrode group are fixed to each other by the thermoplastic resin on the positive electrode side, that is, on the lid member side, and "FIXED NEGATIVE ELECTRODE" indicates a lithium ion capacitor in which the container and the wound electrode group are fixed to each other by the thermoplastic resin on the negative electrode side, that is, on the bottom portion side of the container. Further, "NORMAL ARTICLE WITH NO TABS" indicates a lithium ion capacitor with no tabs and with no vibration resistance measures or impact resistance measures taken, "FIXED POSITIVE ELECTRODE WITH NO TABS" indicates a lithium ion capacitor with no tabs in which the container and the wound electrode group are fixed to each other by the thermoplastic resin on the positive electrode side, that is, on the lid member side, and "FIXED NEGATIVE ELECTRODE WITH NO TABS" indicates a lithium ion capacitor with no tabs and in which the container and the wound electrode group are fixed to each other by the thermoplastic resin on the negative electrode side, that is, on the bottom portion side of the container.

As seen from the results shown in Fig. 23, if the container and the wound electrode group were fixed to each other by the thermoplastic resin, the measurement values of ESR and OCV before and after the test were hardly varied. For "NORMAL ARTICLE", the measurement values of ESR and OCV before and after the test were significantly varied. For "NORMAL ARTICLE WITH NO TABS", the measurement values of ESR and OCV before and after the test were varied, although to a smaller degree than for "NORMAL ARTICLE".

As seen from the results shown in Fig. 24, in addition, if the container and the wound electrode group were fixed to each other by the thermoplastic resin, the measurement values of the capacitance, DCR, and the leakage current before and after the test were hardly varied. For "NORMAL ARTICLE", the capacitance, DCR, and the leakage current were not measurable. This is considered to be because the joints between the tabs and the current collecting members were mostly broken. For "NORMAL ARTICLE WITH NO TABS", the measurement value of the capacitance after the test was smaller than that before the test, and the measurement values of DCR and the leakage current after the test were larger than those before the test. This is considered to be because the mixtures applied to the current collectors were partially peeled off since the electrode group was not fixed, although the joints were not broken since no tabs were used.

According to the results shown in Figs. 23 and 24, if the container and the wound electrode group were fixed to each other by the thermoplastic resin, it is considered that the properties of the lithium ion capacitor were hardly impaired, and that the vibration resistance and the impact resistance were enhanced. The effect of enhancing the vibration resistance and the impact resistance was obtained for both the lithium ion capacitor with tabs and the lithium ion capacitor with no tabs.

The lithium ion capacitors used in the test were unsealed after the vibration test to examine the state of the joint between the positive current collecting member and the tabs of the positive electrode and the state of the joint between the negative current collecting member and the tabs of the negative electrode. Then, for the lithium ion capacitor which used the thermoplastic resin, most of the joints were not broken. For the lithium ion capacitor with no vibration resistance measures taken, most of the connections were broken. For the lithium ion capacitor with no tabs, the joints were not affected. For the lithium ion capacitor with no vibration resistance measures taken, however, the mixtures applied to the current collectors were partially peeled off.

In the lithium ion capacitor according to the embodiment described above, a solution obtained by dissolving lithium phosphate hexafluoride (LiPF₆) as an electrolyte in a mixed solvent of ethylene carbonate, dimethyl carbonate, and diethyl carbonate is used as the non-aqueous electrolyte. However, it is a matter of course that any other non-aqueous electrolyte obtained by dissolving a common lithium salt as an electrolyte in an organic solvent may also be used. Examples of the electrolyte include LiClO₄, LiAsF₆, LiBF₄, LiB(C₆H₅)₄, CH₃SO₃Li, CF₃SO₃Li, etc., and a combination of these. Examples of the organic solvent include propylene carbonate, diethyl carbonate, 1,2-dimethoxyethane, 1,2-diethoxyethane, γ-butyrolactone, tetrahydrofuran, 1,3-dioxolane, 4-methyl-1,3-dioxolane, diethyl ether, sulfolane, methylsulfolane, acetonitrile, propionitrile, etc., and a combination of two or more of these. The mixing/compounding ratio is also not specifically limited.

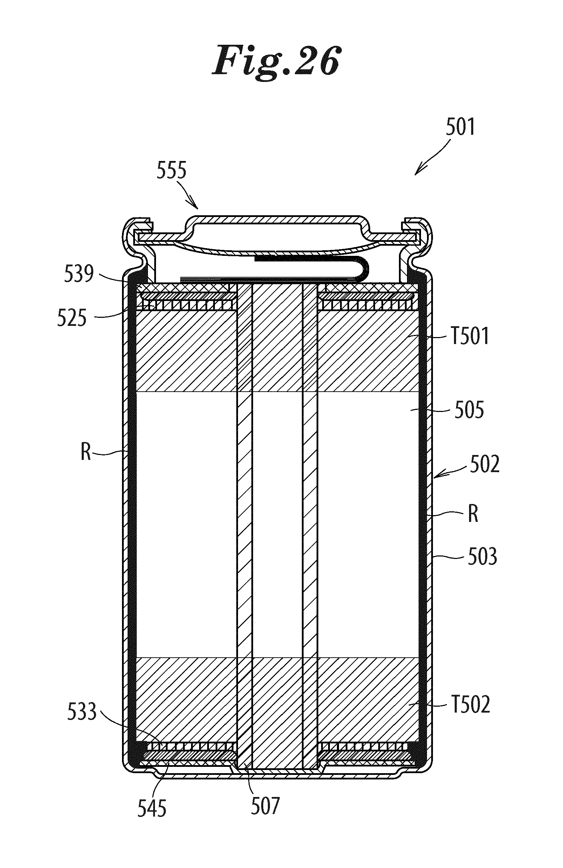

Fig. 26 is a cross-sectional view of a cylindrical lithium ion capacitor according to a sixth embodiment of the present invention taken along the longitudinal direction. In Fig. 26, some of the constituent members of the lithium ion capacitor are not shown. The lithium ion capacitor according to the embodiment is a lithium ion capacitor with no tabs in which unapplied portions 525 and 533 of a wound electrode group 505 and current collecting members (a positive current collecting member 539 and a negative current collecting member 545) are welded to each other by laser welding as in the lithium ion capacitor according to the first embodiment shown in Fig. 1. In the lithium ion capacitor according to the embodiment, as shown in Fig. 26, the outer peripheral surface of the wound electrode group 505 and the inner wall surface of a container 503 are joined to each other by a thermoplastic resin R obtained by mixing 80 wt% of polypropylene and 20 wt% of polyethylene. In addition, the thermoplastic resin R is accumulated between a portion of the electrode group unit 502 located close to a container lid 555 of the container 503, that is, the positive current collecting member 539 and a part of the wound electrode group 505, and a part of the inner wall surface of the container 503 to be cured. The thermoplastic resin R is accumulated between the negative current collecting member 545 and a part of the wound electrode group 505, and a part of the inner wall surface of the container 503 to be cured. Further, both ends of the electrode group unit 502 are surrounded in a tightened state by shrink tubes T501 and T502 made of a polyolefin. According to this configuration, the wound electrode group can be fixed to the container by a plurality of fixing means. This makes it possible to more reliably fix the electrodes and the current collecting members to each other, and to further enhance the vibration resistance of the electrical storage device.

In the embodiments described above, the positive current collecting member is connected to the lid member, and the negative current collecting member is connected to the bottom portion of the container. However, it is a matter of course that the negative current collecting member may be connected to the lid member and the positive current collecting member may be connected to the bottom portion of the container.

In the embodiment described above, the present invention is applied to a cylindrical lithium ion capacitor. However, it is a matter of course that the present invention may also be applied to rectangular lithium ion capacitors, and to other non-aqueous electrolyte storage devices such as lithium ion batteries.

### Industrial Applicability

According to the present invention, an electrical storage device with its properties as a battery not degraded by enhancing its vibration resistance and impact resistance can be provided. Description of Reference Numerals

- 1: capacitor
- 2: electrode group unit
- 3: container
- 3a: annular projected portion
- 3b: annular wall portion
- 3c: top portion
- 3d: annular wall portion
- 5: wound electrode group
- 7: axial core
- 9: positive electrode
- 9A: divided positive electrode
- 9B: divided positive electrode
- 11: negative electrode
- 13: separator
- 15: separator
- 17: lithium metal support member
- 19: aluminum foil
- 21: positive active material mixture
- 23: applied portion
- 25: unapplied portion
- 27: copper foil
- 29: negative active material mixture
- 31: applied portion
- 33: unapplied portion
- 35: lithium metal
- 37: copper foil
- 37: support member
- 39: positive current collecting member
- 40: outer peripheral portion
- 41: hole
- 43: groove
- 44A: positive terminal portion
- 44B: positive terminal portion
- 45: negative current collecting member
- 46: outer peripheral portion
- 49: groove
- 51: molten metal
- 53: molten metal
- 55: container lid
- 57: lid body
- 59: lid cap
- 59a: flat portion
- 59b: projected portion
- 61: void portion
- 63: insulating ring member
- 65: insulating member
- 71: annular bottom wall portion
- 73: protruded portion
- 75: insulating member

## Claims

1. An electrical storage device comprising:
an electrode group unit including
a wound electrode group formed by winding a laminated member including a positive electrode, a negative electrode, and a separator, the positive electrode having an applied layer formed by applying a positive active material mixture to a first metal foil and an unapplied portion of the first metal foil, on which the positive active material mixture is not applied along the layer of the positive active material mixture, the negative electrode having an applied layer formed by applying a negative active material mixture to a second metal foil and an unapplied portion of the second metal foil, on which the negative active material mixture is not applied along the layer of the negative active material mixture, and the positive electrode and the negative electrode being laminated via the separator such that the unapplied portion of the positive electrode and the unapplied portion of the negative electrode project in directions opposite to each other,
a positive current collecting member welded to the unapplied portion of the positive electrode, the unapplied portion projecting beyond the separator at one end portion of the wound electrode group, and
a negative current collecting member welded to the unapplied portion of the negative electrode, the unapplied portion projecting beyond the separator at the other end portion of the wound electrode group; and
a bottomed cylindrical container configured to form a terminal of one polarity and to receive the electrode group unit together with an non-aqueous electrolyte, wherein:
an annular projected portion is formed a predetermined distance away from an opening portion of the container toward a bottom portion of the container to be projected inwardly of the container over the entire periphery of the container;
a lid member configured to form a terminal of the other polarity is disposed as electrically insulated from the container between an annular retaining portion and the annular projected portion, the retaining portion being formed by radially inwardly crimping an annular wall portion of the container adjacent to the opening portion;
one of the positive current collecting member and the negative current collecting member that is electrically connected to the lid member is disposed near the annular projected portion and shaped and sized such that an outer peripheral portion of the one current collecting member is located closer to a peripheral wall portion of the container than a top portion of the annular projected portion;
an electrically insulating member configured to electrically insulate the one current collecting member and the container from each other is disposed in a compressed state between the annular projected portion and the outer peripheral portion of the one current collecting member and also between an annular wall portion of the peripheral wall portion continuous with the annular projected portion and the outer peripheral portion of the one current collecting member;
the bottom portion of the container includes an annular bottom wall portion continuous with the peripheral wall portion of the container and a protruded portion continuous with the annular bottom wall portion and protruded in a direction away from the lid member;
the other of the positive current collecting member and the negative current collecting member that is electrically connected to the bottom portion is shaped and sized such that an outer peripheral portion of the other current collecting member is located closer to the peripheral wall portion of the container than an inner edge portion of the annular bottom wall portion is located;
at least an outer peripheral surface of the wound electrode group and an inner wall surface of the container are partially or entirely joined to each other by a resin material that does not react with the non-aqueous electrolyte;
the resin material is accumulated between a portion of the electrode group unit located close to the opening portion of the container and the opening portion and a part of the inner wall surface of the container leading to the opening portion to be cured;
one end of the electrode group unit is surrounded in a tightened state by a first shrink tube such that the first shrink tube extends across a part of the positive current collecting member and a part of the wound electrode group, the first shrink tube being formed from a material that does not react with the non-aqueous electrolyte; and
the other end of the electrode group unit is surrounded in a tightened state by a second shrink tube such that the second shrink tube extends across a part of the negative current collecting member and a part of the wound electrode group, the second shrink tube being formed from a material that does not react with the non-aqueous electrolyte.

2. The electrical storage device according to claim 1, wherein:
the resin material that does not react with the non-aqueous electrolyte is a polypropylene-based resin material, a polyethylene-based resin material, or a fluorine-based resin material.

3. An electrical storage device comprising:
an electrode group unit including
a wound electrode group formed by winding a laminated member including a positive electrode in which a positive active material mixture is applied to a first metal foil, a negative electrode in which a negative active material mixture is applied to a second metal foil, and a separator, the positive electrode and the negative electrode being laminated via the separator,
a positive current collecting member connected to the positive electrode at one end portion of the wound electrode group, and
a negative current collecting member connected to the negative electrode at the other end portion of the wound electrode group;
a bottomed cylindrical container configured to form a terminal of one polarity and to receive the electrode group unit together with a non-aqueous electrolyte infiltrating the wound electrode group; and
fixing means for fixing the wound electrode group to the container, the fixing means being configured not to react with the non-aqueous electrolyte.

4. The electrical storage device according to claim 3, wherein:
the positive electrode has an applied layer formed by applying the positive active material mixture and an unapplied portion of the first metal foil, on which the positive active material mixture is not applied along the layer of the positive active material mixture;
the negative electrode has an applied layer formed by applying the negative active material mixture and an unapplied portion of the second metal foil, on which the negative active material mixture is not applied along the layer of the negative active material mixture;
the positive electrode and the negative electrode are laminated such that the unapplied portion of the positive electrode and the unapplied portion of the negative electrode project in directions opposite to each other;
the positive current collecting member is welded to the unapplied portion of the positive electrode, the unapplied portion projecting beyond the separator;
the negative current collecting member is welded to the unapplied portion of the negative electrode, the unapplied portion projecting beyond the separator;
an annular projected portion is formed a predetermined distance away from an opening portion of the container toward a bottom portion of the container to be projected inwardly of the container over the entire periphery of the container;
a lid member configured to form a terminal of the other polarity is disposed as electrically insulated from the container between an annular retaining portion and the annular projected portion, the retaining portion being formed by radially inwardly crimping an annular wall portion of the container adjacent to the opening portion; and
the fixing means is composed of
one of the positive current collecting member and the negative current collecting member that is electrically connected to the lid member, the one current collecting member being disposed near the annular projected portion and shaped and sized such that an outer peripheral portion of the one current collecting member is located closer to a peripheral wall portion of the container than a top portion of the annular projected portion, and
an electrically insulating member configured to electrically insulate the one current collecting member and the container from each other, the electrically insulating member being disposed in a compressed state between the annular projected portion and the outer peripheral portion of the one current collecting member and also between an annular wall portion of the peripheral wall portion continuous with the annular projected portion and the outer peripheral portion of the one current collecting member.

5. The electrical storage device according to claim 4, wherein:
the bottom portion of the container includes an annular bottom wall portion continuous with the peripheral wall portion of the container and a protruded portion continuous with the annular bottom wall portion and protruded in a direction away from the lid member; and
the other of the positive current collecting member and the negative current collecting member that is electrically connected to the bottom portion is shaped and sized such that an outer peripheral portion of the other current collecting member is located closer to the peripheral wall portion of the container than an inner edge portion of the annular bottom wall portion is located.

6. The electrical storage device according to claim 3, wherein
the fixing means includes a resin material that partially or entirely joins at least an outer peripheral surface of the wound electrode group and an inner wall surface of the container to each other and that does not react with the non-aqueous electrolyte.

7. The electrical storage device according to claim 6, wherein:
the positive electrode has an applied layer formed by applying the positive active material mixture and an unapplied portion of the first metal foil, on which the positive active material mixture is not applied along the layer of the positive active material mixture;
the negative electrode has an applied layer formed by applying the negative active material mixture and an unapplied portion of the second metal foil, on which the negative active material mixture is not applied along the layer of the negative active material mixture;
the positive electrode and the negative electrode are laminated such that the unapplied portion of the positive electrode and the unapplied portion of the negative electrode project in directions opposite to each other;
the positive current collecting member is welded to the unapplied portion of the positive electrode, the applied portion projecting beyond the separator; and
the negative current collecting member is welded to the unapplied portion of the negative electrode, the applied portion projecting beyond the separator.

8. The electrical storage device according to claim 6, wherein:
the positive electrode has a plurality of tabs;
the negative electrode has a plurality of tabs;
the positive current collecting member is connected to the plurality of tabs of the positive electrode; and
the negative current collecting member is connected to the plurality of tabs of the negative electrode.

9. The electrical storage device according to any one of claims 6 to 8, wherein
the resin material is accumulated to be cured between a part of the electrode group unit located close to the bottom portion of the container and the bottom portion and also between the part of the electrode group unit located close to the bottom portion of the container and a part of the inner wall surface of the container leading to the bottom portion.

10. The electrical storage device according to claim 8, wherein:
the resin material is a thermoplastic resin material;
the thermoplastic resin material is accumulated to be cured between a part of the electrode group unit located close to the bottom portion of the container and the bottom portion and also between the part of the electrode group unit located close to the bottom portion of the container and a part of the inner wall surface of the container leading to the bottom portion; and
the thermoplastic resin material joins the plurality of tabs of the positive electrode to each other, or further joins the plurality of tabs of the positive electrode and the positive current collecting member to each other.

11. The electrical storage device according to any one of claims 6 to 8, wherein
the resin material is accumulated to be cured between a part of the electrode group unit located close to the opening portion of the container and the opening portion and also between the part of the electrode group unit located close to the opening portion of the container and a part of the inner wall surface of the container leading to the opening portion.

12. The electrical storage device according to claim 8, wherein:
the resin material is a thermoplastic resin material;
the resin material is accumulated between a part of the electrode group unit located close to the opening portion of the container and the opening portion and also between the part of the electrode group unit located close to the opening portion of the container and a part of the inner wall surface of the container leading to the opening portion to be cured; and
the thermoplastic resin material joins the plurality of tabs of the negative electrode to each other, or further joins the plurality of tabs of the negative electrode and the negative current collecting member to each other.

13. The electrical storage device according to any one of claims 6 to 8, wherein
the resin material is a fluorine-based resin.

14. The electrical storage device according to any one of claims 6 to 8, wherein
the resin material is a thermoplastic resin material.

15. The electrical storage device according to any one of claims 6 to 8, wherein
the resin material is a polypropylene-based resin material or a polyethylene-based resin material.

16. The electrical storage device according to claim 3, wherein the fixing means includes
a first shrink tube configured to surround one end of the electrode group unit in a tightened state to extend across a part of the positive current collecting member and a part of the wound electrode group, and
a second shrink tube configured to surround the other end of the electrode group unit in a tightened state to extend across a part of the negative current collecting member and a part of the wound electrode group.

17. The electrical storage device according to any one of claims 3 to 8, wherein
the electrical storage device is a lithium ion capacitor.

18. The electrical storage device according to any one of claims 3 to 8, wherein
the electrical storage device is a lithium ion battery.

19. A method of manufacturing an electrical storage device, comprising:
preparing
an electrode group unit including
a wound electrode group formed by winding a laminated member including a positive electrode with a plurality of tabs, a separator, and a negative electrode with a plurality of tabs,
a positive current collecting member disposed close to one end of the wound electrode group and connected to the plurality of tabs of the positive electrode included in the wound electrode group, and
a negative current collecting member disposed close to the other end of the wound electrode group and connected to the plurality of tabs of the negative electrode included in the wound electrode group,
a bottomed cylindrical container having an opening portion at one end portion and configured to receive the electrode group unit inside, and
a lid member that blocks the opening portion of the container;
applying a resin material that does not react with a non-aqueous electrolyte to a part of an inner wall surface of the container;
inserting the electrode group unit into the container from the opening portion, following the applying step;
curing the resin material;
electrically connecting between one of the positive current collecting member and the negative current collecting member, and the container;
electrically connecting between the other of the positive current collecting member and the negative current collecting member, and the lid member, and thereafter sealing the opening portion with the lid member; and
injecting the non-aqueous electrolyte from a liquid injection port, following the sealing step.

20. A method of manufacturing an electrical storage device, comprising:
preparing
an electrode group unit including
a wound electrode group formed by winding a laminated member including a positive electrode with a plurality of tabs, a separator, and a negative electrode with a plurality of tabs,
a positive current collecting member disposed close to one end of the wound electrode group and connected to the plurality of tabs of the positive electrode included in the wound electrode group, and
a negative current collecting member disposed close to the other end of the wound electrode group and connected to the plurality of tabs of the negative electrode included in the wound electrode group,
a bottomed cylindrical container having an opening portion at one end portion and configured to receive the electrode group unit inside, and
a lid member that blocks the opening portion of the container;
inserting the electrode group unit into the container from the opening portion;
electrically connecting between one of the positive current collecting member and the negative current collecting member, and the container;
electrically connecting between the other of the positive current collecting member and the negative current collecting member, and the lid member;
putting a thermoplastic resin material that does not react with a non-aqueous electrolyte into the container from the opening portion to dispose the thermoplastic resin material on an inner wall surface of the container and around a part of the wound electrode group and the tabs;
heating the thermoplastic resin material to soften the thermoplastic resin material;
returning the thermoplastic resin material to normal temperature to solidify the thermoplastic resin material, following the heating and softening step; and
sealing the opening portion with the lid member, and thereafter injecting the non-aqueous electrolyte from a liquid injection port.

21. A method of manufacturing an electrical storage device, comprising:
preparing
an electrode group unit including
a wound electrode group formed by winding a laminated member including a positive electrode with a plurality of tabs, a separator, and a negative electrode with a plurality of tabs,
a positive current collecting member disposed close to one end of the wound electrode group and connected to the plurality of tabs of the positive electrode included in the wound electrode group, and
a negative current collecting member disposed close to the other end of the wound electrode group and connected to the plurality of tabs of the negative electrode included in the wound electrode group,
a bottomed cylindrical container having an opening portion at one end portion and configured to receive the electrode group unit inside, and
a lid member that blocks the opening portion of the container;
disposing a thermoplastic resin material that does not react with a non-aqueous electrolyte at a bottom portion of the container;
inserting the electrode group unit into the container from the opening portion;
heating the bottom portion of the container to soften the thermoplastic resin material;
electrically connecting between one of the positive current collecting member and the negative current collecting member, and the container;
returning the thermoplastic resin material to normal temperature to solidify the thermoplastic resin material;
electrically connecting between the other of the positive current collecting member and the negative current collecting member, and the lid member; and
sealing the opening portion with the lid member, and thereafter injecting the non-aqueous electrolyte from a liquid injection port.

22. A method of manufacturing an electrical storage device, comprising:
preparing
an electrode group unit including
a wound electrode group formed by winding a laminated member including a positive electrode with a plurality of tabs, a separator, and a negative electrode with a plurality of tabs,
a positive current collecting member disposed close to one end of the wound electrode group and connected to the plurality of tabs of the positive electrode included in the wound electrode group, and
a negative current collecting member disposed close to the other end of the wound electrode group and connected to the plurality of tabs of the negative electrode included in the wound electrode group,
a bottomed cylindrical container having an opening portion at one end portion and configured to receive the electrode group unit inside, and
a lid member that blocks the opening portion of the container;
disposing a thermoplastic resin material that does not react with a non-aqueous electrolyte at a bottom portion of the container;
inserting the electrode group unit into the container from the opening portion;
electrically connecting between one of the positive current collecting member and the negative current collecting member, and the container;
heating the bottom portion of the container to soften the thermoplastic resin material;
returning the thermoplastic resin material to normal temperature to solidify the thermoplastic resin material following the heating and softening step; and
electrically connecting between the other of the positive current collecting member and the negative current collecting member and, the lid member; and
sealing the opening portion with the lid member, and thereafter injecting the non-aqueous electrolyte from a liquid injection port.
